# EUROPEAN PATENT APPLICATION

(11) **EP 4 440 192 A1**
(43) Date of publication of application: **02.10.2024**
(21) Application number: 22910084.7
(22) Date of filing: 21.12.2022
(51) Int. Cl.: H04W 36/00

(54) **SATELLITE SWITCHING METHOD AND APPARATUS, STORAGE MEDIUM, AND CHIP SYSTEM**

(30) Priority: 24.12.2021 CN 202111602366
(71) Applicant: Huawei Technologies Co., Ltd., Shenzhen, Guangdong 518129 (CN)
(72) Inventor: ZHANG, Chengchen, Shenzhen, Guangdong 518129 (CN); ZONG, Zaifeng, Shenzhen, Guangdong 518129 (CN)
(74) Representative: Gill Jennings & Every LLP
(86) International application number: PCT/CN2022/140726
(87) International publication number: WO 2023/116772

(57) **Abstract**

A satellite switching method, an apparatus, a storage medium, and a chip system are provided, and relate to the field of communication technologies, to reduce signaling overheads and a delay in a switching procedure of a first terminal device. In this application, a first communication apparatus sends a first request message to another apparatus when estimating that the first terminal device is switched from a source access network device to a first target access network device at a future moment. The first request message indicates that a PDU session of the first terminal device is estimated to be switched at a future moment, or the first request message indicates that the first terminal device is estimated to be switched at a future moment. In this way, the another apparatus can prepare for switching of the first terminal device in advance, thereby reducing signaling overheads in the switching procedure of the first terminal device, and reducing a delay in the switching procedure of the first terminal device.

## Description

### CROSS-REFERENCE TO RELATED APPLICATIONS

This application claims priority to Chinese Patent Application No. 202111602366.2, filed with the China National Intellectual Property Administration on December 24, 2021 and entitled "SATELLITE SWITCHING METHOD, APPARATUS, STORAGE MEDIUM, AND CHIP SYSTEM", which is incorporated herein by reference in its entirety.

### TECHNICAL FIELD

This application relates to the field of communication technologies, and in particular, to a satellite switching method, an apparatus, a storage medium, and a chip system.

### BACKGROUND

In a research process of a 5G communication system and a 6G communication system, satellite communication gradually becomes a research hotspot, and satellite communication can supplement some scenarios that are difficult to be covered by ground communication, such as a desert and an ocean. In a satellite communication scenario, a network element originally located on the ground may be deployed on a satellite. For example, a radio access network (radio access network, RAN) device is deployed on a satellite, and a user plane function (user plane function, UPF) network element is deployed on a satellite.

In the scenario in which the RAN device and the UPF network element are deployed on the satellite, when a terminal device does not move or moves at a non-fast speed, the terminal device needs to switch between the RAN device and the UPF network element as the satellite moves. Currently, a large amount of space-to-ground communication is required in a switching procedure of the terminal device. For example, a plurality of times of space-to-ground communication are required, to establish tunnel information and the like for a protocol data unit (protocol data unit, PDU) session. Currently, in the switching procedure of the terminal device, signaling overheads are large, and a delay is long. This greatly affects service experience.

### SUMMARY

Embodiments of this application provide a satellite switching method, an apparatus, a storage medium, and a chip system, to reduce signaling overheads and a delay in a process of switching a terminal device between satellite devices.

According to a first aspect, an embodiment of this application provides a satellite switching method. The method may be performed by an access and mobility management function network element or a module (for example, a chip) used in an access and mobility management function network element, or may be performed by a source access network device or a module (for example, a chip) used in a source access network device. The method includes:

A first communication apparatus estimates that a first terminal device is switched from the source access network device to a first target access network device at a future moment. The first communication apparatus sends a first request message. The first request message indicates that a protocol data unit (protocol data unit, PDU) session of the first terminal device is estimated to be switched at a future moment, or the first request message indicates that the first terminal device is estimated to be switched at a future moment. A source user plane function network element that provides a service for the PDU session before switching and the source access network device are deployed on a first satellite.

Because the source access network device and the source user plane function network element are located on the same satellite, when the first terminal device needs to be switched to the access network device in the future, the first terminal device also needs to be switched to the user plane function network element. In this application, the first communication apparatus may send the first request message to another apparatus when estimating that the first terminal device is to be switched. In this way, the another apparatus may prepare for switching of the first terminal device in advance, for example, may configure information in advance (for example, establish tunnel information for switching of the first terminal device), so that in a subsequent switching procedure of the first terminal device, the preconfigured information may be used. Therefore, signaling overheads for space-to-ground communication in the switching procedure of the first terminal device are reduced, and a delay of the switching procedure of the first terminal device is reduced.

In a possible implementation, the first request message indicates to establish a switched user plane path of the PDU session. In this way, when it is estimated that the first terminal device is to be switched at a future moment, the switched user plane path can be established for the PDU session in advance. Therefore, signaling required for establishing the user plane path in the switching procedure can be saved, and a delay of the switching procedure can be reduced.

In a possible implementation, that a first communication apparatus estimates that a first terminal device is switched from the source access network device to a first target access network device at a future moment includes: The first communication apparatus estimates, based on location information of the first terminal device and a moving track of the first satellite, that the first terminal device is switched from the source access network device to the first target access network device at a future moment.

In this way, the first communication apparatus may not need to rely on information sent by the another apparatus to perform estimation, thereby reducing signaling interaction.

In a possible implementation, that a first communication apparatus estimates that a first terminal device is switched from the source access network device to a first target access network device at a future moment includes: The first communication apparatus receives a second request message. The second request message indicates that the first terminal device is estimated to be switched from the source access network device to the first target access network device at a future moment. The first communication apparatus estimates, based on the second request message, that the first terminal device is switched from the source access network device to the first target access network device at a future moment. In this way, the first communication apparatus may not need to perform estimation based on the location information of the first terminal device and the moving track of the first satellite, thereby reducing load of the first communication apparatus.

In a possible implementation, the first request message includes at least one of information about the first target access network device, information about a first target user plane function network element, or information about a second satellite. The first target access network device and the first target user plane function network element are deployed on the second satellite.

In other words, the first request message may explicitly or implicitly indicate the first target user plane function network element, so that the another apparatus can configure, in the first target user function network element, context for the PDU session of the first terminal device. To reduce cross-satellite communication, the first target user plane function network element and the first target access network device may be deployed on the same satellite. When the first request message includes the information about the first target access network device, the first communication apparatus may select the first target user plane function network element based on the information about the first target access network device. When the first request message includes the information about the second satellite, the first communication apparatus may directly select a user plane function network element on the second satellite as the first target user plane function network element.

In a possible implementation, after the first communication apparatus sends the first request message, the method further includes: the first communication apparatus determines that the first terminal device is switched to the first target access network device. The first communication apparatus sends a third request message. The third request message indicates that the PDU session has been switched (that the PDU session has been switched may be understood as that the switched user plane path of the PDU session has been established). Because the first communication apparatus pre-estimates that the first terminal device is to be switched to the first target access network device, the another apparatus is triggered to prepare for switching of the first terminal device in advance. When the first communication apparatus determines that the first terminal device is actually switched, the first communication apparatus may send an indication that the PDU session has been switched, so that the another apparatus can be prevented from repeatedly configuring context for the PDU session.

In a possible implementation, that the first communication apparatus determines that the first terminal device is switched to the first target access network device includes: The first communication apparatus receives a first path switching request message. The first path switching request message indicates that the PDU session of the first terminal device has been switched (that the PDU session has been switched may be understood as that the switched user plane path of the PDU session has been established). The first communication apparatus determines, based on the first path switching request message, that the first terminal device is switched to the first target access network device.

For example, the first path switching request message may carry a list of activated PDU sessions on a user plane, and a PDU session in the list of activated PDU sessions on the user plane is a PDU session that has been established on the user plane path. In this case, if the first communication apparatus determines that a PDU session is included in the list of activated PDU sessions on the user plane, the first communication apparatus may determine that a switched user plane path of the PDU session has been established.

For another example, the first path switching request message may carry a list of PDU sessions to be activated on the user plane, and a PDU session in the list of PDU sessions to be activated on the user plane is a PDU session whose user plane path has not been established. In this case, if the first communication apparatus determines that a PDU session is not included in the list of to-be-activated PDU sessions on the user plane, the first communication apparatus may consider by default that a switched user plane path of the PDU session has been established. In this application, that the user plane path has been established may be understood as that the user plane has been activated.

Because the first communication apparatus pre-estimates that the first terminal device is to be switched to the first target access network device, the another apparatus is triggered to prepare for switching of the first terminal device in advance. Then, the first path switching request message may carry indication information indicating that the PDU session of the first terminal device has been switched (the PDU session has been switched may be understood as that the switched user plane path of the PDU session has been established). Because the first path switching request message carries the indication information indicating that the PDU session of the first terminal device has been switched (the PDU session has been switched may be understood as that the switched user plane path of the PDU session has been established), a process of determining, by the first communication apparatus, whether the PDU session has been switched is omitted, so that load of the first communication apparatus can be reduced.

In a possible implementation, there may be a case in which the first communication apparatus performs estimation incorrectly. For example, the first terminal device is estimated to be switched to the first target access network device in the future, but in a subsequent switching procedure, the first terminal device is switched to a second target access network device. In this case, preparations need to be performed again for switching the first terminal device to the second target access network device. For example, after the first communication apparatus sends the first request message, the first communication apparatus determines that the first terminal device is switched to the second target access network device. The second target access network device is different from the first target access network device. The first communication apparatus sends a fourth request message. The fourth request message indicates that the PDU session is to be switched (that the PDU session is to be switched may be understood as that a switched user plane path of the PDU session is to be established). In this way, the another apparatus may prepare, based on the fourth request message, for switching the first terminal device to the second target access network device.

In a possible implementation, that the first communication apparatus determines that the first terminal device is switched to the second target access network device includes: The first communication apparatus receives a second path switching request message from the second target access network device. The second path switching request message indicates that the first terminal device is switched to the second target access network device. The second path switching request message may further include a list of PDU sessions to be activated on a user plane, and the list of PDU sessions includes a PDU session for which a user plane path needs to be established. If the PDU session of the first terminal device is included in the list of PDU sessions to be activated, it indicates that a switched user plane path of the PDU session has not been established. In other words, the first communication apparatus determines, based on the second path switching request message, that the first terminal device is switched to the second target access network device, and the user plane path is not established. Therefore, the user plane path needs to be established for the first terminal device.

In a possible implementation, that the first communication apparatus sends a first request message includes: The first communication apparatus sends the first request message to the first target access network device. The first request message is further used to request the first target access network device to allocate a radio resource to the first terminal device. The first communication apparatus receives information about the radio resource allocated to the first terminal device. After the first communication apparatus sends the first request message, the method further includes: The first communication apparatus determines that the first terminal device is switched to the first target access network device. The first communication apparatus sends a radio resource control RRC reconfiguration request message to the first terminal device. The RRC reconfiguration request message includes the information about the radio resource.

When estimating that the first terminal device is to be switched to the first target access network device, the first communication apparatus requests, in advance, the first target access network device to allocate the radio resource to the first terminal device. Therefore, in a process of determining that the first terminal device is actually switched, a step of requesting the first target access network device to allocate the radio resource may be omitted, thereby reducing a delay of the switching procedure.

In a possible implementation, the first communication apparatus sends the first request message to a session management function network element. In this way, the session management function network element can establish context for the PDU session of the first terminal device in advance based on the first request message.

In still another possible implementation, the first communication apparatus sends the first request message to an access and mobility management network element. In this way, the access and mobility management network element may prepare for switching of the first terminal device in advance based on the first request message. For example, the access and mobility management network element may further trigger, based on the first request message, another network element (for example, the session management function network element) to prepare for switching of the first terminal device in advance.

In still another possible implementation, the first communication apparatus sends the first request message to the first target access network device. In this way, the first target access network device may prepare for switching of the first terminal device in advance based on the first request message. For example, the first target access network device may allocate the radio resource for switching of the first terminal device in advance. For another example, the first target access network device may further trigger, based on the first request message, the another network element to prepare for switching of the first terminal device in advance.

According to a second aspect, an embodiment of this application provides a satellite switching method. The method includes: A session management function network element receives a first request message. The first request message indicates that a protocol data unit PDU session of a first terminal device is estimated to be switched at a future moment, and a source user plane function network element and a source access network device are that provide services for the PDU session before switching deployed on a first satellite. The session management function network element sends a fifth request message. The fifth request message requests to configure context of the PDU session in a first target user plane function network element. The first target user plane function network element is a user plane function network element that is selected by the session management function network element and that provides a service for the PDU session after switching, and the first target user plane function network element and a first target access network device that provide the services for the PDU session after switching are deployed on a second satellite.

When receiving the first request message, the session management network element may request to establish the context of the PDU session in the first target user plane function network element, to prepare for switching of the first terminal device in advance, so that in a subsequent switching procedure of the first terminal device, preconfigured information may be used. Therefore, signaling overheads for space-to-ground communication in the switching procedure of the first terminal device are reduced, and a delay of the switching procedure of the first terminal device is reduced.

In a possible implementation, the fifth request message includes the context of the PDU session corresponding to the first target user plane function network element, and/or context of a PDU session corresponding to the first target access network device. The context of the PDU session corresponding to the first target user plane function network element and the context of the PDU session corresponding to the first target access network device are used for communication between the first target user plane function network element and the first target access network device.

In this way, the context of the PDU session corresponding to the first target user plane function network element and/or the context of the PDU session corresponding to the first target access network device may be allocated by the session management network element, so that workload of the first target user function network element and/or the first target access network device can be reduced.

In a possible implementation, the first request message includes at least one of information about the first target access network device, information about the first target user plane function network element, or information about the second satellite. The first target access network device and the first target user plane function network element are deployed on the second satellite. For beneficial effects, refer to the foregoing content. Details are not described again.

In a possible implementation, after the session management function network element sends the fifth request message, the session management function network element receives a fifth response message. The fifth response message indicates that the first target user plane function network element has configured the context of the PDU session.

In a possible implementation, after the session management function network element receives the fifth response message, the method further includes: The session management function network element receives a third request message. The third request message is used to request updating of the context of the PDU session. When the third request message indicates that the PDU session has been switched (that the PDU session has been switched may be understood as that a switched user plane path of the PDU session has been established), the session management function network element returns a third response message based on indication information indicating that the PDU session has been switched. The third response message indicates that the updating of the context of the PDU session context is completed.

Because the third request message carries the indication information indicating that the PDU session has been switched, an SMF may determine that preparations for switching of the first terminal device have been completed in advance, and does not need to prepare for switching of the PDU session of the first terminal device again. Therefore, the third response message may be directly returned. In addition, in this solution, a process of determining, by the session management function network element, whether the PDU session has been switched can be omitted, thereby reducing load of the session management function network element.

In a possible implementation, when the third request message indicates that the PDU session is to be switched, the session management function network element may return the third response message based on the fifth response message. The third response message indicates that the updating of the context of the PDU session is completed.

Because the third request message carries the indication information indicating that the PDU session is to be switched, the SMF may determine, by itself, whether preparations (for example, establishment of the user plane path) for switching of the first terminal device have been completed in advance, and may determine, based on the fifth response message, that preparations for switching of the first terminal device have been completed in advance. Therefore, preparations for switching of the PDU session of the first terminal device do not need to be performed again, and the SMF may directly return the third response message.

In a possible implementation, after the session management function network element receives the fifth response message, the method further includes: The session management function network element receives a fourth request message. The fourth request message is used to request updating of the context of the PDU session. When the fourth request message indicates that the PDU session is to be switched (that the PDU session is to be switched may be understood as that the switched user plane path of the PDU session is to be established), the session management function network element sends a sixth request message when determining that the PDU session is to be switched to a second target user plane function network element. The sixth request message requests to configure the context of the PDU session in the second target user plane function network element.

During actual application, there may be a case in which estimation fails. In this application, when estimation fails, the SMF may need to prepare for switching of the PDU session again.

In a possible implementation, the context of the PDU session corresponding to the first target user plane function network element includes N3 tunnel information of a PDU session of the first terminal device corresponding to the first target user plane function network element. In still another possible implementation, the context of the PDU session corresponding to the first target user plane function network element includes N3 tunnel information and Nx tunnel information of a PDU session of the first terminal device corresponding to the first target user plane function network element.

In a possible implementation, after the session management function network element sends the fifth request message, the method further includes: The session management function network element sends, to a user plane function network element of a second terminal device, the Nx tunnel information of the PDU session corresponding to the first target user plane function network element. Before the first terminal device is actually switched, the session management function network element sends the Nx tunnel information of the PDU session corresponding to the first target user plane function network element to the user plane function network element of the second terminal device in advance. Therefore, in a subsequent switching procedure, a step in which the session management function network element sends the Nx tunnel information of the PDU session corresponding to the first target user plane function network element to the user plane function network element of the second terminal device can be saved, thereby reducing a delay of the switching procedure.

In a possible implementation, after the session management function network element sends the fifth request message, the method further includes: The session management function network element receives a first update message. The first update message includes estimated Nx tunnel information of the switched user plane function network element of the second terminal device. The session management function network element sending the Nx tunnel information of the switched user plane function network element of the second terminal device to the first target user plane function network element. In this way, in a subsequent switching procedure, a step in which the session management function network element sends the Nx tunnel information of the switched user plane function network element of the second terminal device to the first target user plane function network element can be saved, thereby reducing a delay of the switching procedure.

According to a third aspect, an embodiment of this application provides a satellite switching method. The method includes: A first target access network device receives a first request message. The first request message indicates that a first terminal device is estimated to be switched at a future moment. A source user plane function network element and a source access network device that provide services for an unswitched protocol data unit PDU session of the first terminal device are deployed on a first satellite. The first target access network device sends a seventh request message. The seventh request message indicates that the PDU session of the first terminal device is estimated to be switched to the first target access network device at a future moment, and the seventh request message includes indication information of a tunnel configured by the first target access network device for the PDU session.

When receiving the first request message, the first target access network device may establish context of the first terminal device corresponding to the first target access network device, to prepare for switching of the first terminal device in advance, so that when the first terminal device is switched in a subsequent switching procedure, preconfigured information may be used. Therefore, signaling overheads for space-to-ground communication of the first terminal device in the switching procedure are reduced, and a delay of the switching procedure of the first terminal device is reduced.

In a possible implementation, after the first target access network device sends the seventh request message, the method further includes: The first target access network device sends a first response message to the source access network device. The first response message indicates that the first terminal device completes pre-switching. The first response message further includes RRC configuration information required by the first terminal device for accessing the first target access network device. In this way, the first target access network device may send, to the source access network device in a pre-switching phase, the RRC configuration information required by the first terminal device. Therefore, signaling that needs to be consumed because the RRC configuration information needs to be obtained in the switching procedure can be reduced, and a delay of the switching procedure can be further reduced.

In a possible implementation, after the first target access network device sends the seventh request message, the method further includes: The first target access network device receives a seventh response message. The seventh response message includes context of a PDU session corresponding to a first target user plane function network element. The context of the first terminal device corresponding to the first target access network device and the context of the PDU session corresponding to the first target user plane function network element are used for communication between the first target access network device and the first target user plane function network element. The first target user plane function network element is an estimated user plane function network element that provides a service for the PDU session after switching. The first target user plane function network element and the first target access network device are deployed on a second satellite.

When receiving the first request message, the first target access network device may request to establish the context of the PDU session in the first target user plane function network element, to prepare for switching of the first terminal device in advance, so that in a subsequent switching procedure of the first terminal device, preconfigured information may be used. Therefore, signaling overheads for space-to-ground communication of the first terminal device are reduced, and a delay of the switching procedure of the first terminal device is reduced.

In a possible implementation, after the first target access network device receives the seventh response message, the method further includes: The first target access network device receives a radio access control RRC reconfiguration completion indication message from the first terminal device. The first target access network device sends a first path switching request message. The first path switching request message indicates that the PDU session of the first terminal device has been switched (that the PDU session has been switched may be understood as that a switched user plane path of the PDU session has been established).

Because the first path switching request message carries indication information indicating that the first terminal device has been switched, a process in which another apparatus determines whether the PDU session has been switched is omitted, so that load of a first communication apparatus can be reduced.

According to a fourth aspect, an embodiment of this application provides a communication apparatus. The apparatus may be an access and mobility management function network element, a source access network device, a session management function network element, or a first target access network device, or a module (for example, a chip) in any one of these devices and network elements. The apparatus has a function of implementing any implementation method of the first aspect. The function may be implemented by hardware, or may be implemented by hardware executing corresponding software. The hardware or the software includes one or more modules corresponding to the foregoing function.

According to a fifth aspect, an embodiment of this application provides a communication apparatus. The apparatus may be an access and mobility management function network element, a source access network device, a session management function network element, or a first target access network device, or a module (for example, a chip) in any one of these devices and network elements. The apparatus may include a processor and a memory. The memory is configured to store computer instructions, and when the apparatus runs, the processor executes the computer instructions stored in the memory, to enable the apparatus to perform any implementation method in the first aspect to the third aspect.

According to a sixth aspect, an embodiment of this application provides a communication apparatus, including units or means (means) configured to perform the steps of any implementation method in the first aspect to the third aspect.

According to a seventh aspect, an embodiment of this application provides a communication apparatus. The apparatus may be an access and mobility management function network element, a source access network device, a session management function network element, or a first target access network device, or a module (for example, a chip) in any one of these devices and network elements. The apparatus may include a processor and an interface circuit. The processor is configured to communicate with another apparatus through the interface circuit, and perform any implementation method in the first aspect to the third aspect. There are one or more processors.

According to an eighth aspect, an embodiment of this application provides a communication apparatus. The apparatus may be an access and mobility management function network element, a source access network device, a session management function network element, or a first target access network device, or a module (for example, a chip) in any one of these devices and network elements. The apparatus may include a processor coupled to a memory. The processor is configured to invoke a program stored in the memory, to perform any implementation method in the first aspect to the third aspect. The memory may be located inside or outside the apparatus. There may be one or more processors.

According to a ninth aspect, an embodiment of this application further provides a computer-readable storage medium. The computer-readable storage medium stores instructions, and when the instructions are run on a communication apparatus, any implementation method in the first aspect to the third aspect is performed.

According to a tenth aspect, an embodiment of this application further provides a computer program product. The computer program product includes a computer program or instructions, and when the computer program or the instructions are run by a communication apparatus, any implementation method in the first aspect to the third aspect is performed.

According to an eleventh aspect, an embodiment of this application further provides a chip system, including a processor, configured to perform any implementation method in the first aspect to the third aspect.

For technical effects that can be achieved in any one of the fourth aspect to the eleventh aspect, refer to the technical effects that can be achieved in any one of the first aspect to the third aspect. No repeated description is provided.

### BRIEF DESCRIPTION OF DRAWINGS

FIG. 1 is a schematic diagram of a 5G network architecture based on a service-oriented architecture;
FIG. 2 is a schematic diagram of a 5G network architecture based on a point-to-point interface;
FIG. 3 is a schematic diagram of a communication path between UEs;
FIG. 4a is a schematic flowchart of a satellite switching method according to an embodiment of this application;
FIG. 4b-1 to FIG. 4b-3 are a schematic flowchart of another satellite switching method according to an embodiment of this application;
FIG. 4c-1 to FIG. 4c-3 are a schematic flowchart of another satellite switching method according to an embodiment of this application;

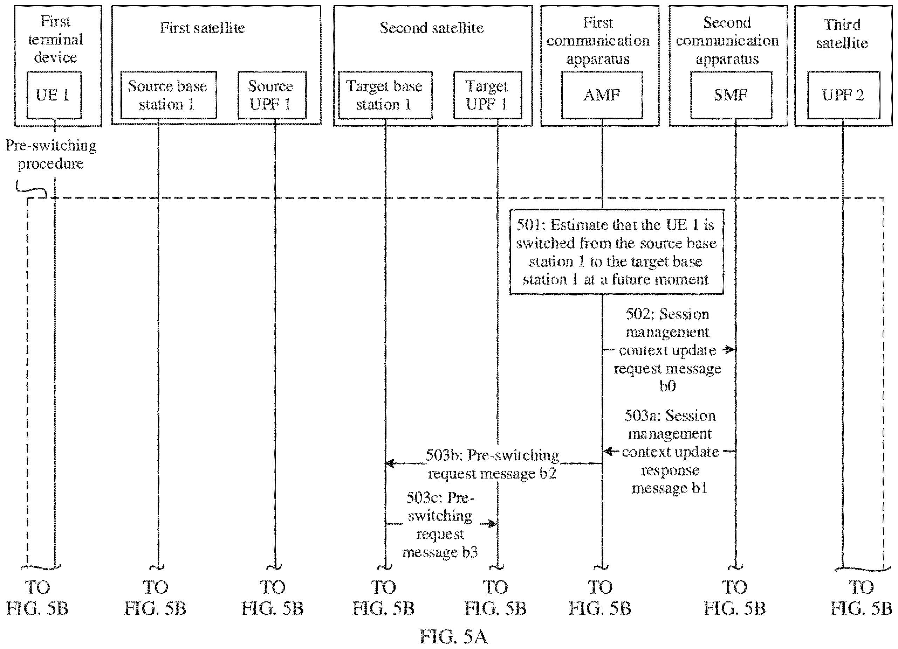

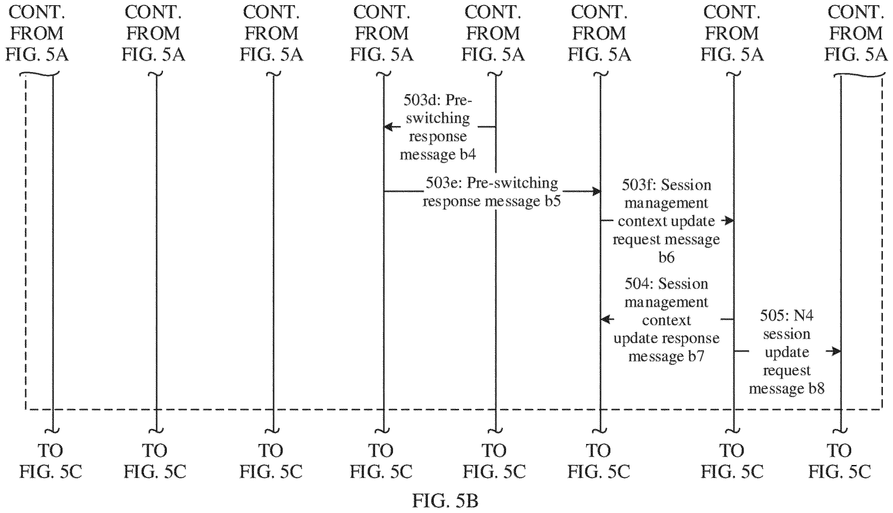

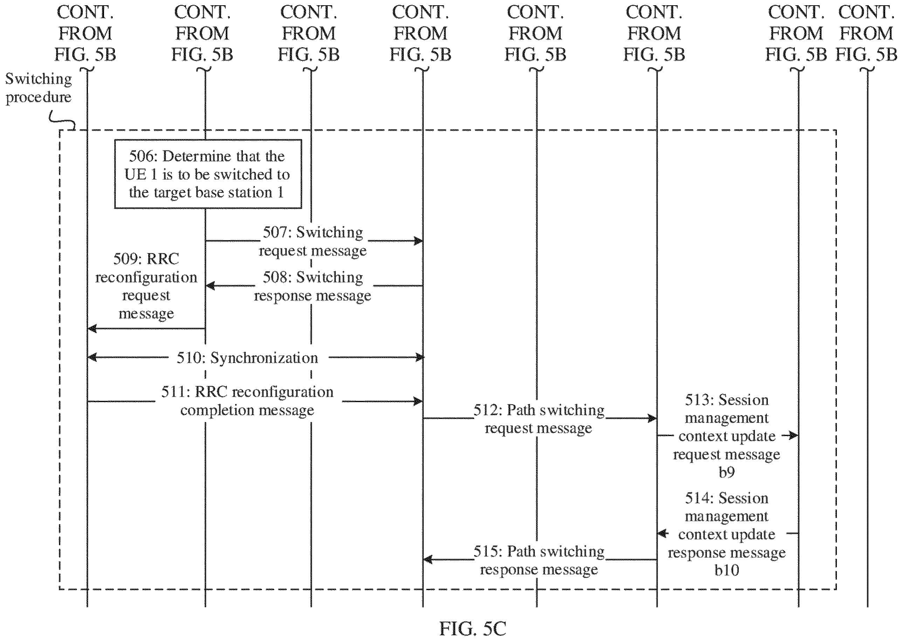

FIG. 5A to FIG. 5C are a schematic flowchart of another satellite switching method according to an embodiment of this application;

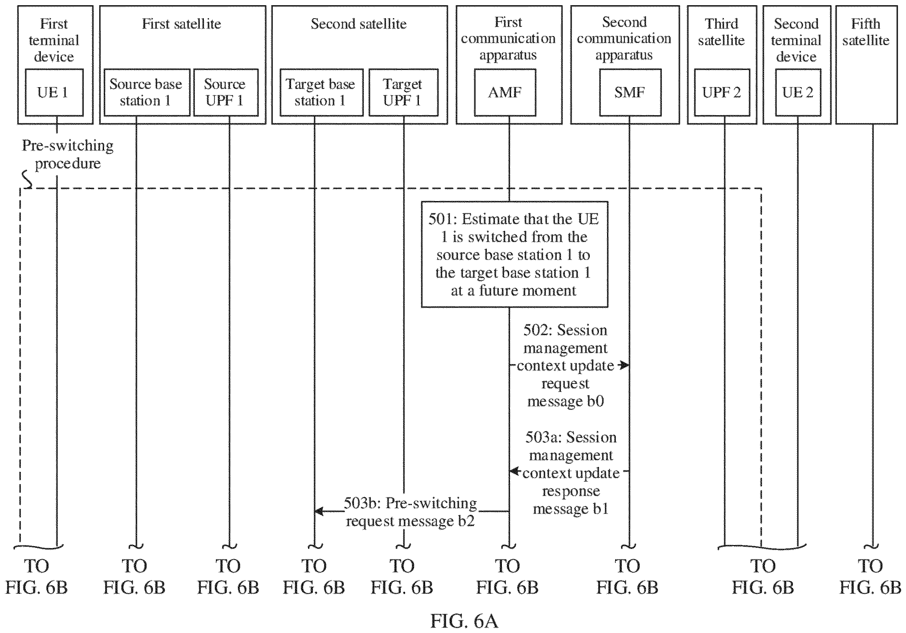

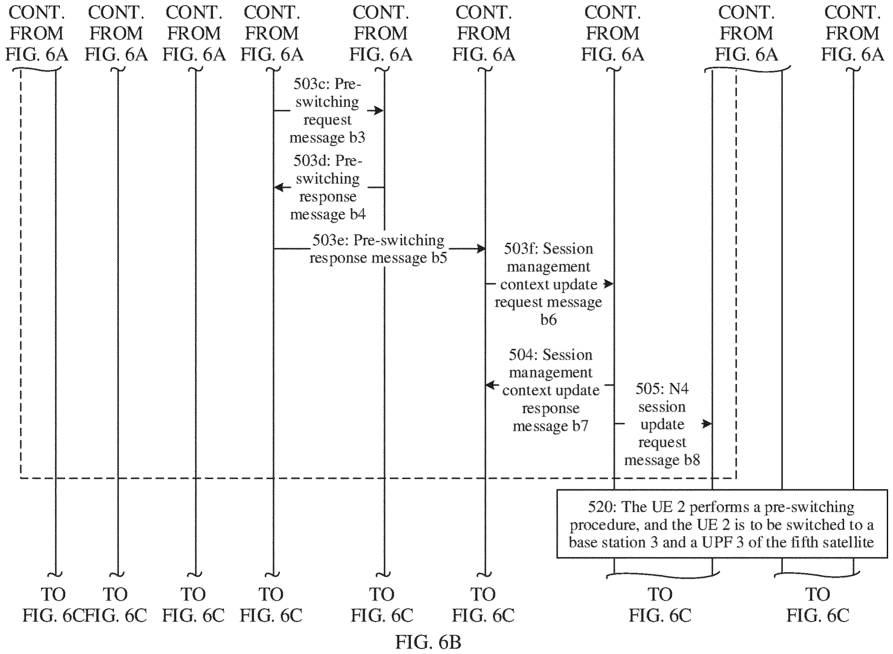

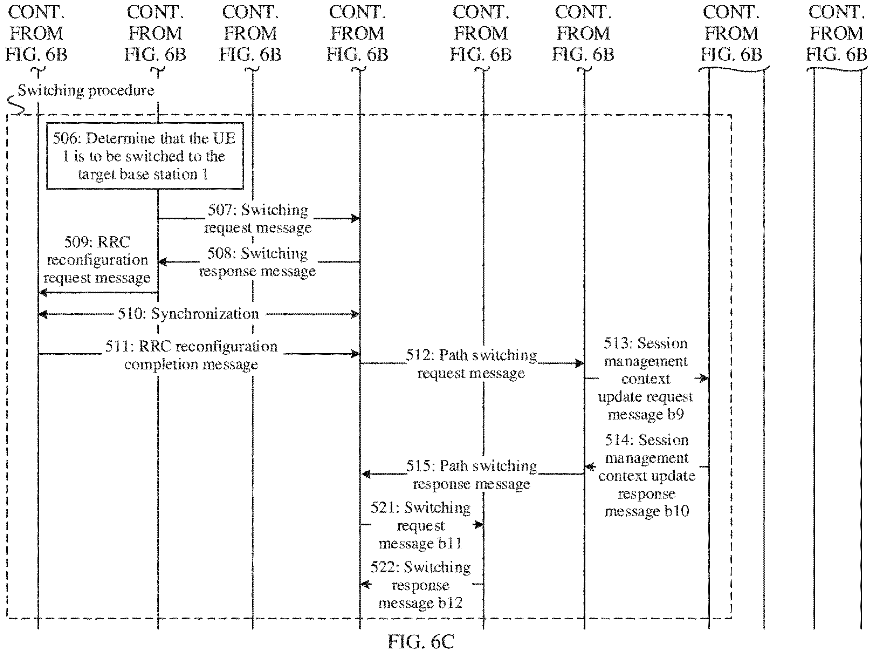

FIG. 6A to FIG. 6C are a schematic flowchart of another satellite switching method according to an embodiment of this application;

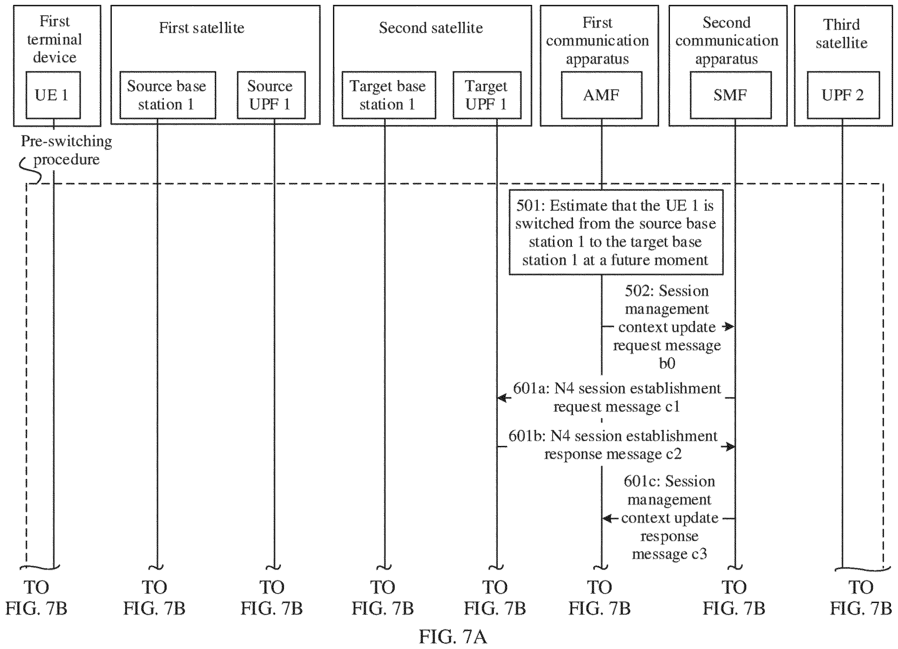

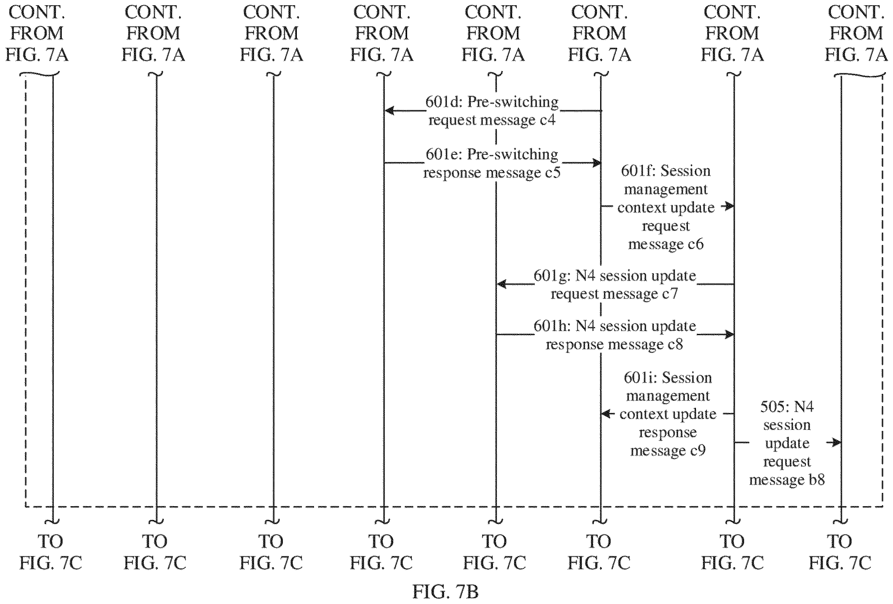

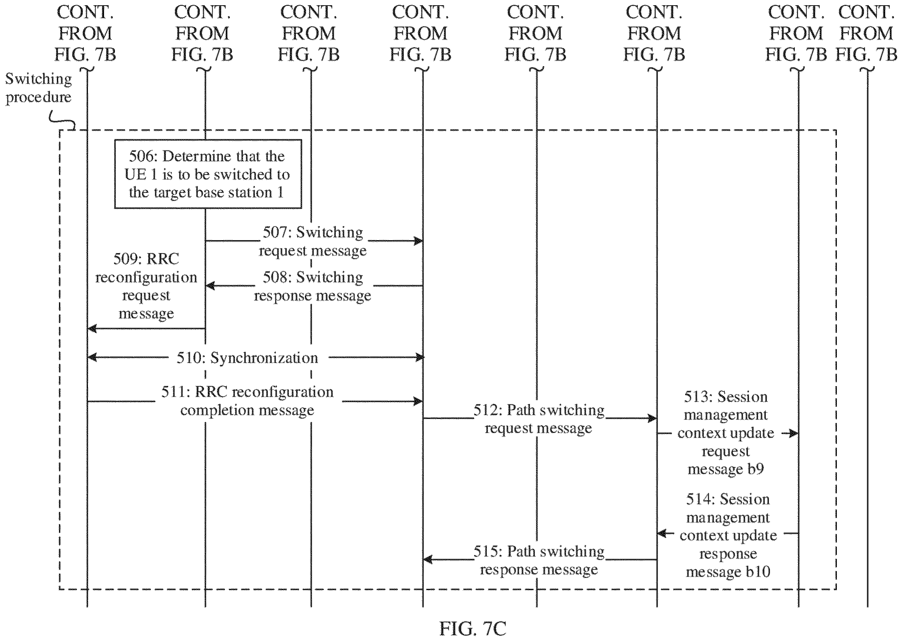

FIG. 7A to FIG. 7C are a schematic flowchart of another satellite switching method according to an embodiment of this application;

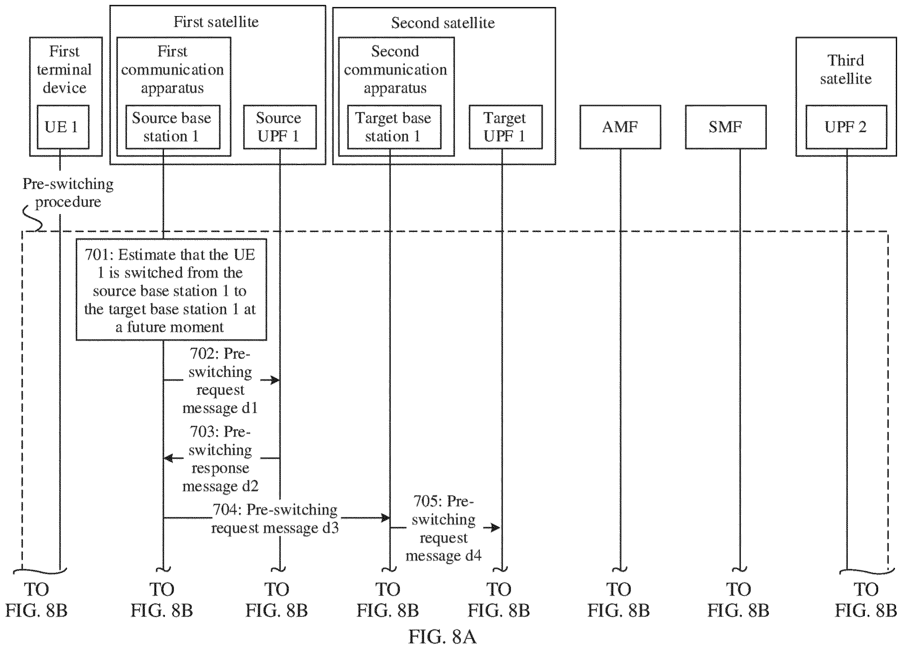

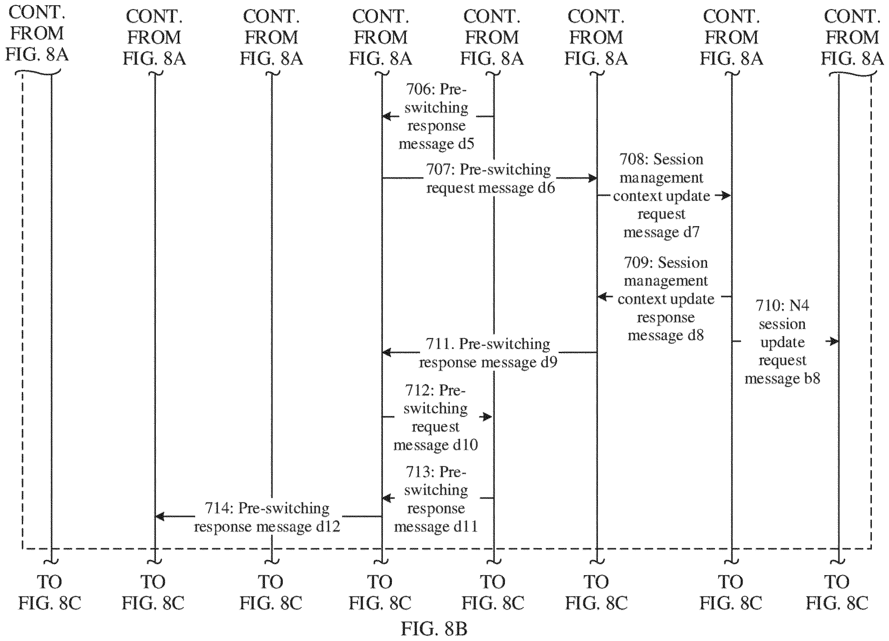

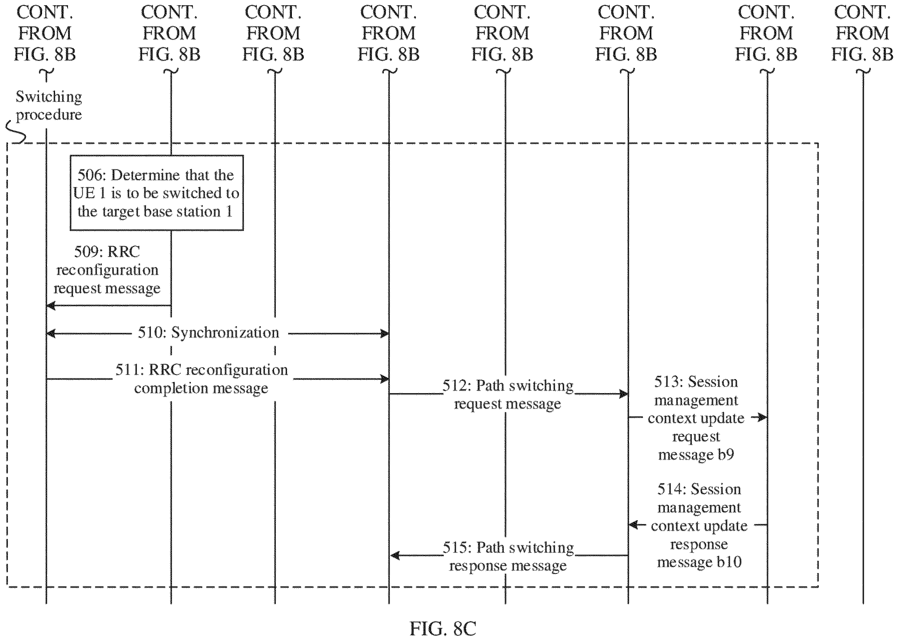

FIG. 8A to FIG. 8C are a schematic flowchart of another satellite switching method according to an embodiment of this application;

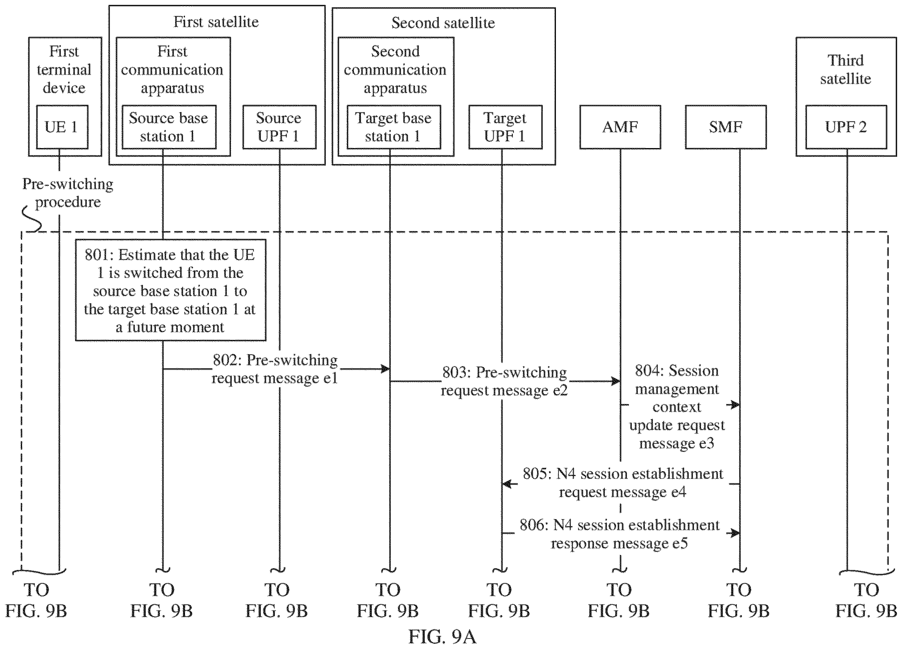

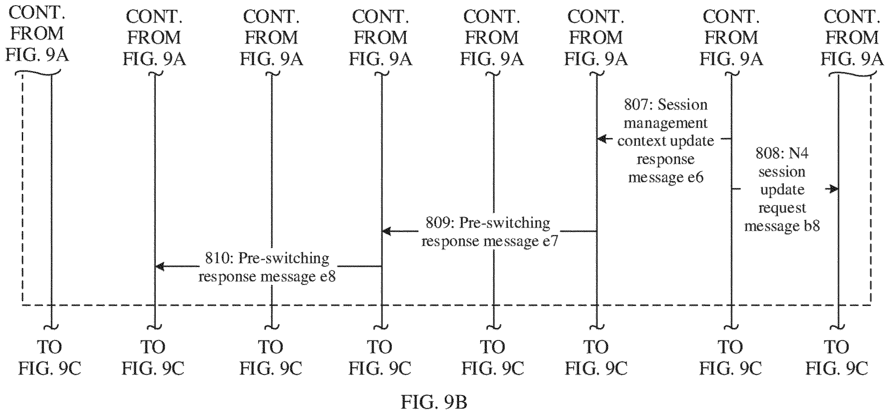

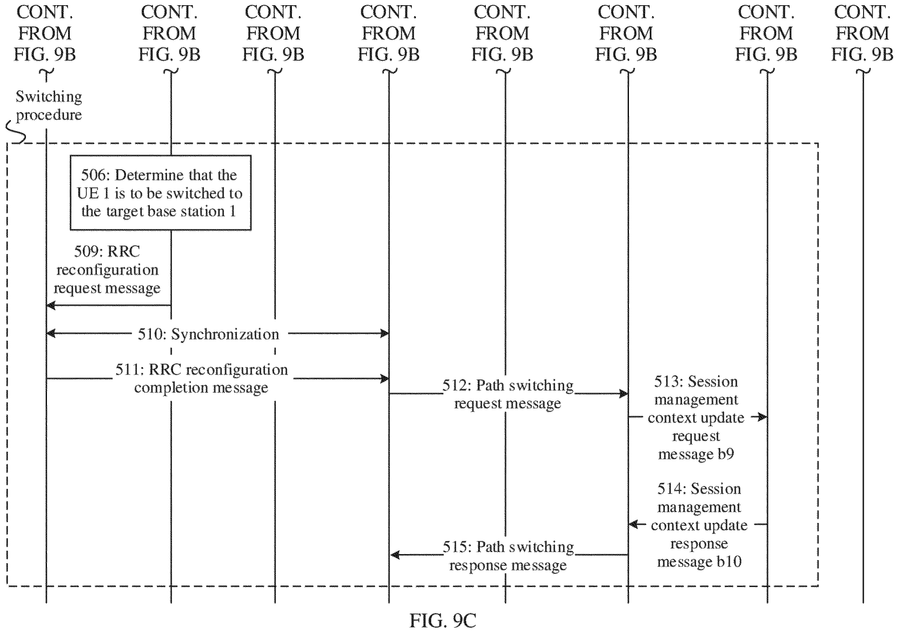

FIG. 9A to FIG. 9C are a schematic flowchart of another satellite switching method according to an embodiment of this application;

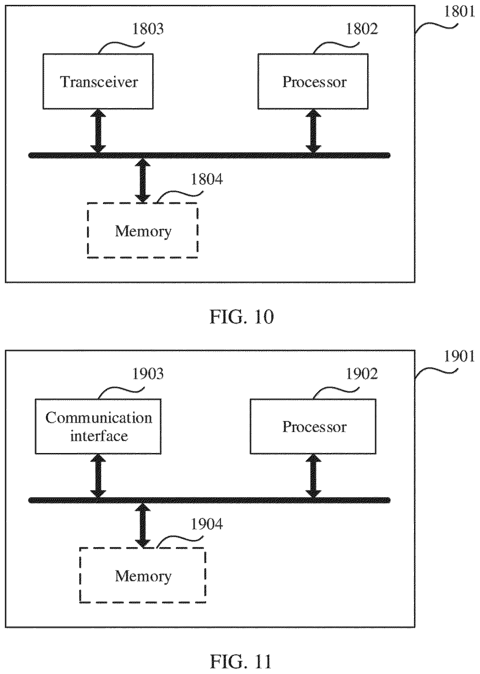

FIG. 10 is a schematic diagram of a communication apparatus according to an embodiment of this application;
FIG. 11 is a schematic diagram of another communication apparatus according to an embodiment of this application; and

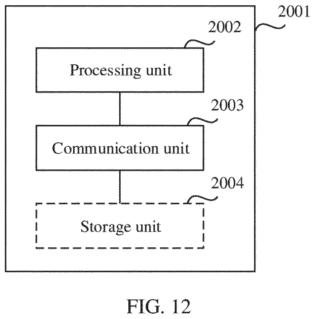

FIG. 12 is a schematic diagram of another communication apparatus according to an embodiment of this application.

### DESCRIPTION OF EMBODIMENTS

To address challenges of wireless broadband technologies and maintain a leading advantage of the 3rd generation partnership project (3rd generation partnership project, 3GPP) network, the 3GPP standard group develops a next-generation mobile communication network system (Next Generation System) architecture, which is referred to as a 5G network architecture. The architecture not only supports access to a 5G core network (core network, CN) by using a radio access technology (such as a long term evolution (long term evolution, LTE) access technology or a 5G radio access network (radio access network, RAN) access technology) defined by the 3GPP standard group, but also supports access to a core network by using a non-3GPP (non-3GPP) access technology and by using a non-3GPP interworking function (non-3GPP interworking function, N3IWF) or a next generation access gateway (next generation packet data gateway, ngPDG).

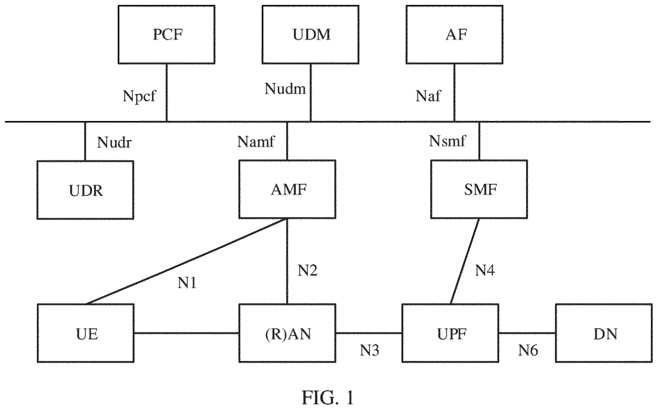

FIG. 1 is a schematic diagram of a 5G network architecture based on a service-oriented architecture. The 5G network architecture shown in FIG. 1 may include an access network device and a core network device. A terminal device accesses a data network (data network, DN) by using the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be a user equipment (user equipment, UE), a mobile station, a mobile terminal device, or the like. The terminal device may be widely applied to various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable device, smart transportation, and a smart city. The terminal device may be a mobile phone, a tablet computer, a computer having a wireless transceiver function, a wearable device, a vehicle, an urban air transportation vehicle (such as an uncrewed aerial vehicle or a helicopter), a ship, a robot, a robot arm, a smart home device, or the like.

The access network device may be a radio access network (RAN) device or a wireline access network (wireline access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, a base station in a future mobile communication system, or a module or unit that completes some functions of a base station, such as a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed-line phone network device, a switch, or a router.

The access network device and the terminal device may be at fixed locations, or may be movable. The access network device and the terminal device may be deployed on land, including an indoor or outdoor scenario, or a handheld or vehicle-mounted scenario; or may be deployed on a water surface; or may be deployed on a plane, a balloon, or a man-made satellite in the air. Application scenarios of the access network device and the terminal device are not limited in embodiments of this application.

The AMF network element mainly performs functions such as mobility management and access authentication/authorization. In addition, the AMF network element is further responsible for transmitting a user policy between the terminal device and the PCF network element.

The SMF network element includes functions such as performing session management, executing a control policy delivered by the PCF, selecting the UPF, and allocating an internet protocol (internet protocol, IP) address of the terminal device.

The UPF network element includes functions such as user plane data forwarding, session/flow-level charging statistics, and bandwidth restriction.

The UDM network element includes functions such as subscription data management and user access authorization.

The UDR network element includes functions such as storage and retrieval of subscription data, policy data, application data, and other types of data.

The NEF network element is mainly configured to support capability and event exposure.

The AF network element mainly transfers a requirement of an application side for a network side, for example, a QoS requirement or user equipment status event subscription. The AF may be a third-party functional entity, or may be an operator-deployed application service, for example, an IP multimedia subsystem (IP Multimedia Subsystem, IMS) voice call service. The AF network element includes an AF network element (that is, an AF network element of an operator) in a core network and a third-party AF network element (for example, an application server of an enterprise).

The PCF network element is responsible for policy control functions such as session-level or service flow-level charging, QoS bandwidth guarantee and mobility management, and terminal device policy decision. The PCF network element includes an access and mobility management policy control network element (access and mobility management policy control function, AM PCF) and a session management policy control function (session management PCF, SM PCF) network element. The AM PCF network element is configured to formulate an AM policy for the terminal device, and the AM PCF network element may also be referred to as a policy control network element (PCF for a UE) that provides a service for the terminal device. The SM PCF network element is configured to formulate a session management policy (session management policy, SM policy) for a session. The SM PCF network element may also be referred to as a policy control network element (PCF for a PDU session) that serves the session.

The NRF network element may be configured to provide a network element discovery function, and provide, based on a request from another network element, network element information corresponding to a network element type. The NRF further provides a network element management service, for example, registration, update, and deregistration of a network element and subscription and push of a network element status.

The BSF provides functions such as BSF service registration, deregistration, and update, NRF connection detection, session binding information creation, UE information obtaining, and session binding information query for duplicate IP addresses.

The AUSF network element is responsible for authenticating a user, to determine whether the user or a device is allowed to access a network.

The DN is a network outside an operator network. The operator network may access a plurality of DNs. A plurality of services may be deployed in the DN, to provide services such as a data service and/or a voice service for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

Npcf, Nufr, Nudm, Naf, Namf and Nsmf in FIG. 1 are service-based interfaces respectively provided by the PCF, UDR, UDM, AF, AMF, and SMF, and are used to invoke corresponding service-based operations. N1, N2, N3, N4, and N6 are interface sequence numbers. The meanings of these interface sequence numbers are as follows.
(1) N1: an interface between the AMF and the terminal device, which may be used to transmit non access stratum (non access stratum, NAS) signaling (for example, including a QoS rule from the AMF) to the terminal device, and the like.
(2) N2: an interface between the AMF and the access network device, which may be used to transfer radio bearer control information from a core network side to the access network device, and the like.
(3) N3: an interface between the access network device and the UPF, which is mainly used to transmit uplink and downlink user plane data between the access network device and the UPF.
(4) N4: an interface between the SMF and the UPF, which may be used to transfer information between a control plane and a user plane, including delivery of forwarding rules, QoS control rules, traffic statistics rules, and the like from the control plane to the user plane, and reporting of user plane information.
(5) N6: an interface between the UPF and the DN, which is used to transmit uplink and downlink user data flows between the UPF and the DN.

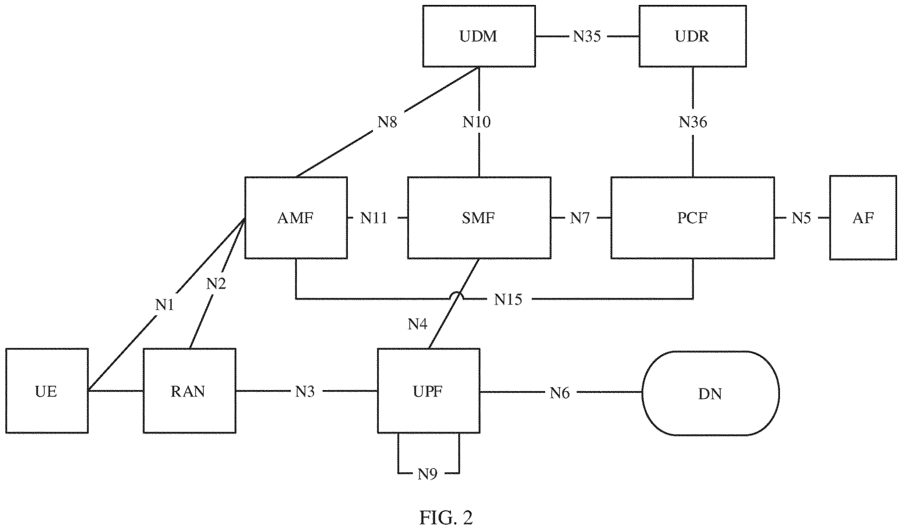

FIG. 2 is a schematic diagram of a 5G network architecture based on a point-to-point interface. For descriptions of functions of network elements, refer to the descriptions of functions of corresponding network elements in FIG. 2. Details are not described again. A main difference between FIG. 2 and FIG. 1 lies in that an interface between control plane network elements in FIG. 1 is a service-based interface, and an interface between control plane network elements in FIG. 2 is a point-to-point interface.

In the architecture shown in FIG. 2, names and functions of the interfaces between the network elements are as follows.
(1) For meanings of N1, N2, N3, N4, and N6 interfaces, refer to the foregoing descriptions.
(2) N5: an interface between an AF network element and a PCF network element, which is used to deliver an application service request and report a network event.
(3) N7: an interface between a PCF network element and an SMF network element, which may be used to deliver a protocol data unit (protocol data unit, PDU) session granularity control policy and a service data flow granularity control policy.
(4) N8: an interface between an AMF network element and a UDM network element, which is used by the AMF network element to obtain access and mobility management-related subscription data and authentication data from the UDM network element, and used by the AMF network element to register mobility management-related information of a terminal device with the UDM network element.
(5) N9: a user plane interface between a UPF network element and the UPF network element, which is used to transmit uplink and downlink user data flows between the UPF network elements.
(6) N10: an interface between the SMF network element and the UDM network element, which is used by the SMF network element to obtain session management-related subscription data from the UDM network element, and used by the SMF network element to register session-related information of a terminal device with the UDM network element.
(7) N 11: an interface between the SMF network element and the AMF network element, which may be used to transmit PDU session tunnel information between an access network device and the UPF, transmit a control message sent to the terminal device, transmit radio resource control information sent to the access network device, and the like.
(8) N15: an interface between the PCF network element and the AMF network element, which may be used to deliver a terminal device policy and an access control related policy.
(9) N35: an interface between the UDM network element and a UDR network element, which is used by the UDM network element to obtain subscriber subscription data information from the UDR network element.
(10) N36: an interface between the PCF network element and the UDR network element, which is used by the PCF network element to obtain policy-related subscription data and application data-related information from the UDR network element.

It may be understood that the foregoing network elements or functions may be network elements in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one functional module in one device. This is not specifically limited in embodiments of this application.

A user plane network element, a mobility management network element, and a session management network element in this application may respectively be a UPF network element, an AMF network element, and an SMF network element in a 5G system, or may be network elements that have functions of a UPF network element, an AMF network element, and an SMF network element in future communication such as a 6G network. This is not limited in this application. In embodiments of this application, an example in which the UPF network element, the AMF network element, and the SMF network element respectively are a user plane network element, a mobility management network element, and a session management network element is used for description. In addition, the UPF network element, the AMF network element, and the SMF network element are respectively referred to as a UPF, an AMF, and an SMF for short.

For ease of description, in embodiments of this application, a base station (for example, a 4G eNB, a 5G gNB, or a base station in future communication) is used as an example of an access network device for description, and a "base station" that appears subsequently may be replaced with an "access network device". A "source base station 1" that appears subsequently may be replaced with "a first access network device of the first terminal device". A "target base station 1" that appears subsequently may be replaced with "a first target access network device of the first terminal device". A "target base station 2" that appears subsequently may be replaced with "a second target access network device of the first terminal device". All "base stations 2" that appear subsequently may be replaced with "access network devices of the second terminal device".

In embodiments of this application, an example in which a UE is used as a terminal device is used for description, and a "UE" that appears subsequently may be replaced with a "terminal device". A "UE 1" in embodiments of this application may be replaced with the "first terminal device". A "UE 2" in this embodiment of this application may be replaced with the "second terminal device".

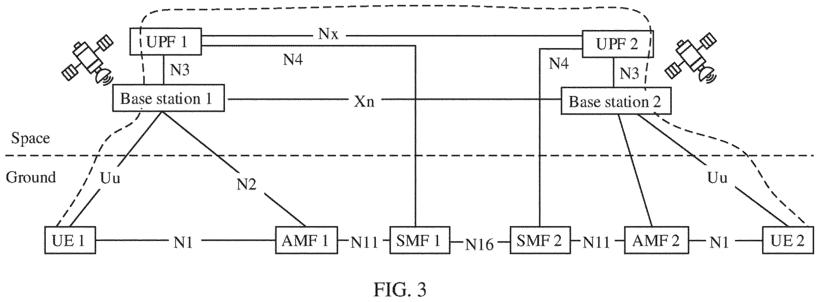

Based on the foregoing content, FIG. 3 is an example of a schematic diagram of an architecture of a possible satellite communication system. For example, a base station and a UPF are deployed on a satellite. As shown in FIG. 3, a communication path between a UE 1 and a UE 2 is: the UE 1 - > a satellite base station 1 of the UE 1 - > a satellite UPF 1 of the UE 1 - > a satellite UPF 2 of the UE 2 - > a satellite base station 2 of the UE 2 - > a UE 2. The path includes two segments of satellite-to-ground communication, which specifically are: (1) the UE 1 - > the satellite base station 1 of the UE 1; and (2) the satellite base station 2 - > the UE 2.

As shown in FIG. 3, after the UPF is deployed on the satellite, to reduce complexity of inter-satellite routing, when direct communication is performed between the UE 1 and the UE 2, an Nx tunnel may be established between a satellite UPF of the UE 1 and a satellite UPF of the UE 2, to forward data between the satellites of the UE 1 and the UE 2. Therefore, an IP address of the UE may not be exposed on an inter-satellite link interface, and a bottom-layer routing module of an inter-satellite link only sees an IP address of the satellite UPF and cannot see the IP address of the UE. It can be learned from FIG. 3 that an Nx interface is added between the satellite UPF 1 and the satellite UPF 2, that is, the Nx tunnel is established between the satellite UPF 1 and the satellite UPF 2. For example, the Nx tunnel may be an N19 tunnel, and the Nx tunnel may be a GPRS tunnelling protocol user plane (GRPS Tunnelling Protocol User Plane, GTP-U) tunnel. A GPRS refers to a general packet radio service (general packet radio service).

In FIG. 3, to reduce a delay, a base station serving a UE and a UPF may be located on a same satellite. Therefore, the UPF 1 and the base station 1 are located on a same satellite, the UPF 2 and the base station 2 are located on a same satellite, and the Nx tunnel is established between the UPF 1 and the UPF 2, so that when forwarding a data packet for communication between the UE 1 and the UE 2, the UPF 1 and the UPF 2 do not need to process UE IP address-based routing, thereby reducing complexity of inter-satellite routing. The UPF 1 of the UE 1 and the UPF 2 of the UE 2 may be controlled by different SMFs, or may be controlled by a same SMF. FIG. 3 shows a case in which the UPF 1 and the UPF 2 are separately controlled by different SMFs.

When the base station and the UPF are deployed on the satellite, because the satellite moves around the earth at a fixed frequency, and a low-orbit satellite moves at a high speed, satellite switching occurs even if the UE does not move on the ground. In the foregoing architecture, satellite switching means that both the base station and the UPF that serve the UE change. Therefore, when the UE is switched to another base station, the UPF also needs to be switched accordingly.

In a possible implementation, after a source base station determines that the UE 1 needs to be switched to a target base station 1, each network element starts to prepare for switching of the UE 1. For example, in this process, an SMF deployed on the ground frequently interacts with network elements (for example, the target base station 1 and the target UPF 1) on the satellite, to configure a context of a PDU session of the UE 1 in the target base station 1 and the target UPF 1. A large amount of space-to-ground communication results in a long delay in the switching procedure of the UE 1.

For the foregoing problem, this embodiment of this application provides a solution. In this solution, when it is estimated that the UE 1 is to be switched in the future, preparations may be performed in advance for switching of the UE 1 (for example, the context is configured for the PDU session of the UE 1 on the target base station 1 and the target UPF 1). In this way, in a subsequent switching procedure of the UE 1, switching may be performed by using preconfigured information, thereby reducing signaling overheads of space-to-ground communication in the switching procedure of the UE 1. In this way, a delay of the switching procedure of the UE 1 is reduced. Configuring the context of the PDU session mentioned in this embodiment of this application may be understood as creating a user plane connection between the base station and the UPF for the PDU session. The following further describes the solutions provided in embodiments of this application with reference to the accompanying drawings.

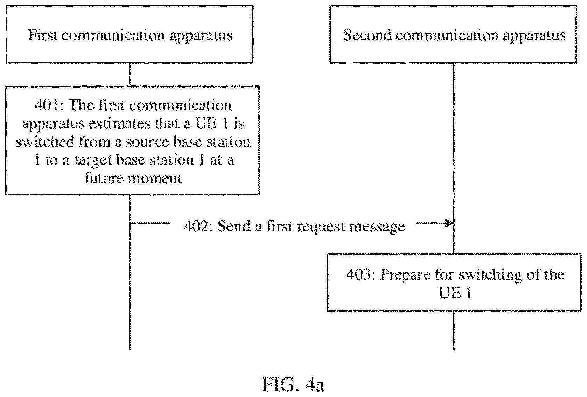

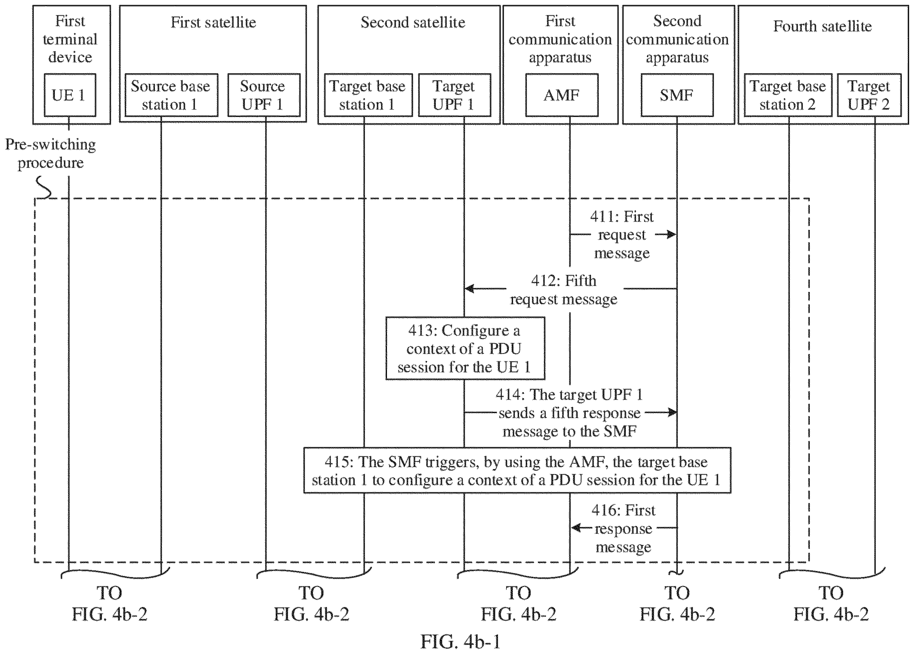

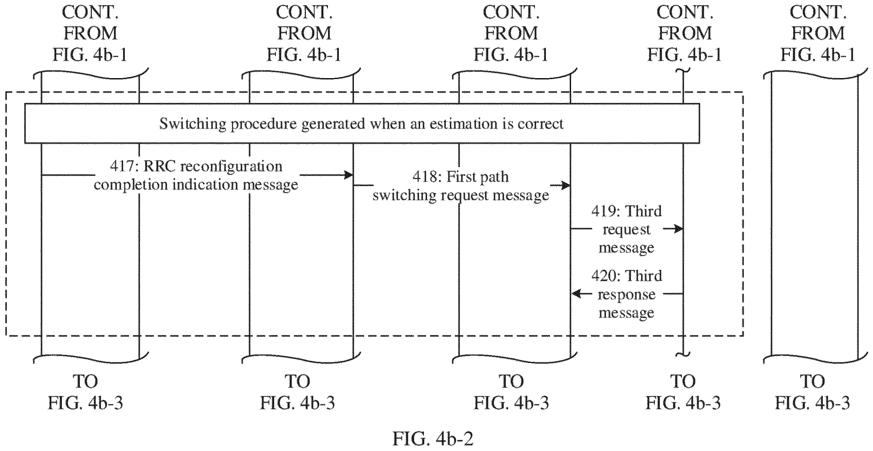

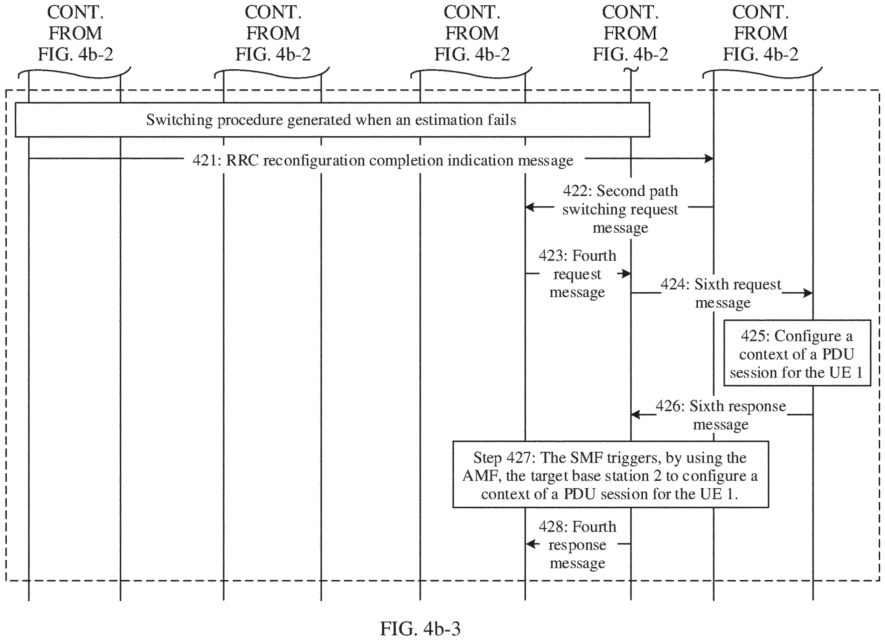

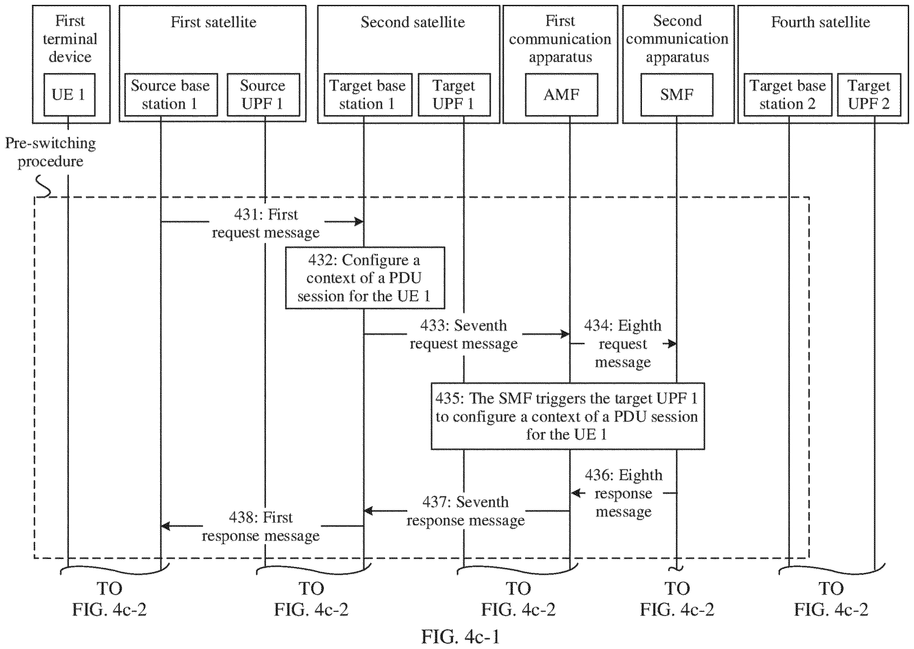

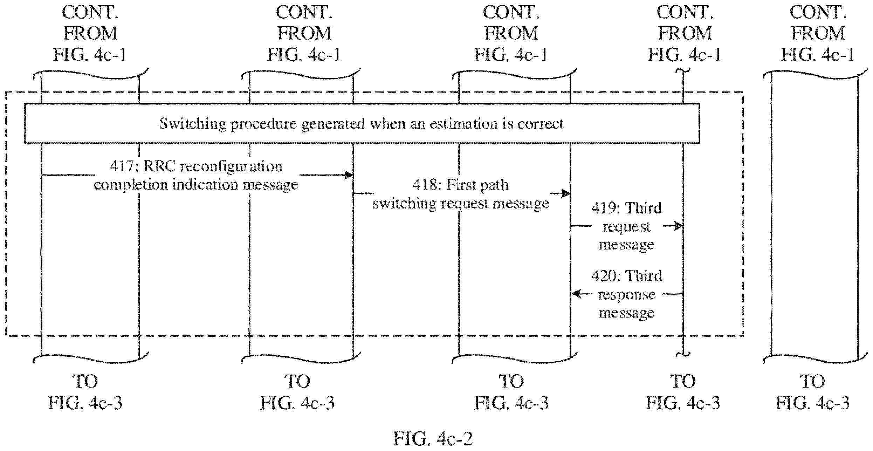

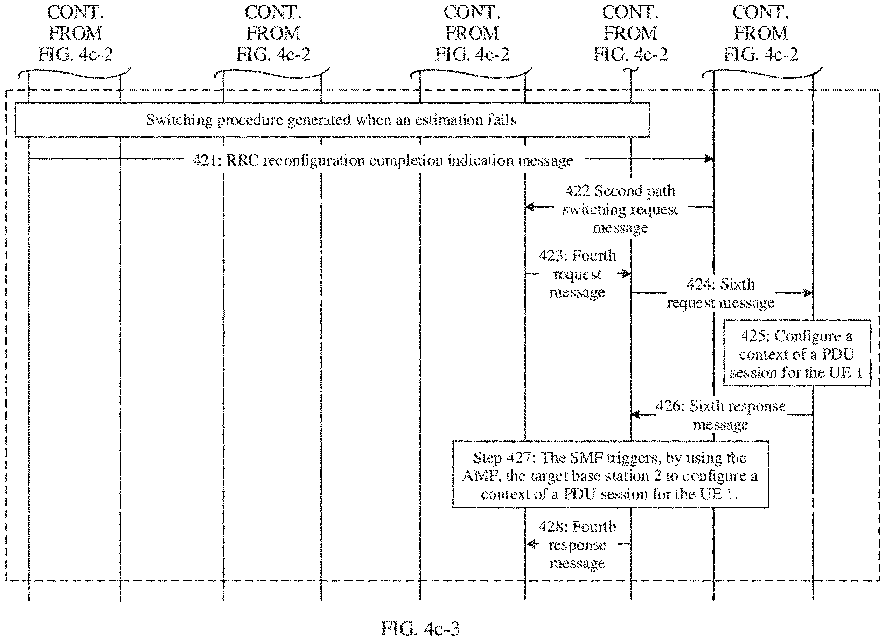

Based on the foregoing content, FIG. 4a is an example of a schematic flowchart of a possible satellite switching method according to an embodiment of this application. The solution shown in FIG. 4a is described from a perspective of interaction between a first communication apparatus and a second communication apparatus. The first communication apparatus may be a source base station 1, an AMF, or the like, or may be an internal apparatus or a chip of the source base station 1, the AMF, or the like. The second communication apparatus may be an SMF, a target base station 1, or the like, or may be an internal apparatus or a chip of the SMF, the target base station 1, or the like.

It should be noted that in this embodiment of this application, the UE 1 may have one or more PDU sessions. In this embodiment of this application, one PDU session of the UE 1 is used as an example for description. An execution procedure of another PDU session of the UE 1 is similar to that of the PDU session of the UE 1. Details are not described again. In this embodiment of this application, the PDU session of the UE 1 is switched, and a source UPF 1 and the source base station 1 that provide services for the PDU session before switching are deployed on a same satellite (for example, a first satellite). In this case, when a base station of the PDU session of the UE 1 is switched, a UPF that provides a service for the PDU session also needs to be switched.

In an example in FIG. 4a, a satellite of the UE 1 is switched. Before switching, the source base station 1 and the source UPF 1 on the first satellite provide services for the UE 1. After switching, the target base station 1 and a target UPF 1 on a second satellite provide services for the UE 1. A satellite of the UE 2 is not switched, and a base station 2 and a UPF 2 on a third satellite provide services for the UE 2. Alternatively, it may be understood that the UE 2 has completed switching before the UE 1 is switched, and the base station 2 and the UPF 2 on the third satellite provide services for the UE 2 after the satellite is switched.

As shown in FIG. 4a, the method includes the following steps.

Step 401: The first communication apparatus estimates that UE 1 is switched from the source base station 1 to the target base station 1 at a future moment.

In this embodiment of this application, that the first communication apparatus "estimates" that the UE 1 is switched from the source base station 1 to the target base station 1 at a future moment means that the first communication apparatus pre-estimates whether the UE 1 is switched from the source base station 1 to the target base station 1 in the future. "Estimate" may also be replaced with another word, for example, "determine", "predetermine", "pre-estimate", "predict", or "presume".

Step 402: The first communication apparatus sends a first request message.

Correspondingly, the second communication apparatus receives the first request message.

In this embodiment of this application, there are two implementations of the first request message. In one implementation, the first request message indicates that the UE 1 is estimated to be switched at a future moment.

For example, the first request message may include indication information indicating that the UE 1 is estimated to be switched at a future moment.

For another example, the first request message may not include the "indication information indicating that the UE 1 is estimated to be switched at a future moment", but the first request message has a function of indicating that the UE 1 is estimated to be switched at a future moment.

For example, the first request message is sent by the source base station to the target base station 1, and the first request message is a pre-switching request message d2. In this case, the first request message has a capability of indicating the UE 1 to switch to the target base station 1, and the target base station 1 may determine, based on the received first request message, that the UE 1 is switched to the target base station 1 at a future moment.

In still another possible implementation, the first request message indicates that the PDU session of the UE 1 is estimated to be switched at a future moment.

For example, the first request message may include pre-switching indication information indicating that the PDU session of the UE 1 is estimated to be switched at a future moment.

For another example, the first request message may not include pre-switching indication information, but the first request message has an indication function.

Step 403: The second communication apparatus prepares for switching of the UE 1.

The method procedure provided in this embodiment of this application may be divided into two parts. A first part may be referred to as a pre-switching procedure, and a second part may be referred to as a switching procedure. The method shown in FIG. 4a belongs to the pre-switching procedure. Compared with a solution in which a series of preparations is performed in the switching procedure, in this embodiment of this application, some preparations (for example, the context of the PDU session may be established for the UE 1) may be performed in advance for switching of the UE 1 by using the pre-switching procedure, so that signaling interaction in a subsequent switching procedure can be reduced, especially signaling interaction between the air and the ground, thereby reducing a delay of the subsequent switching procedure.

In this embodiment of this application, in step 401, the first communication apparatus may estimate, by using the following possible implementation a1 or implementation a2, that the UE 1 is switched from the source base station 1 to the target base station 1 at a future moment.

Implementation a1: The first communication apparatus estimates, based on location information of the UE 1 and a moving track of the first satellite, that the UE 1 is switched from the source base station 1 to the target base station 1 at a future moment.

In this embodiment of this application, a satellite (for example, the first satellite, the second satellite, a fourth satellite, and the third satellite) is in a moving state, and the satellite may move regularly. For example, the first communication apparatus may determine a moving track of the satellite based on information like an ephemeris (ephemeris (ephemeris), which may also be referred to as an ephemeris table, an ephemeris, a calendar, or an almanac, and is used to locate information about a celestial body at any moment), and may further estimate location information of the satellite at a moment based on information like the ephemeris. Certainly, the moving track of the satellite or the location information of the satellite may also be sent by another apparatus to the first communication apparatus. In this embodiment of this application, the moving track of the satellite may be understood as pure moving track information of the satellite, or may be understood as pure location information of the satellite at a moment, or may be understood as combination information of the moving track information of the satellite and the location information of the satellite at the moment.

In the implementation a1, in a possible implementation, the UE 1 is located in a signal coverage area of the first satellite at a first moment (the first moment in this embodiment of this application may also be understood as a current moment). The first communication apparatus estimates, based on the location information of the UE 1 and the moving track information of the first satellite, that the UE 1 is switched from the source base station 1 to the target base station 1 at a second moment when the UE 1 is estimated to be in the signal coverage area of the second satellite at the second moment. The second moment is a future moment later than the first moment.

In this embodiment of this application, the first communication apparatus may further estimate, by using the following possible implementations a1-1 and a1-2, whether the UE 1 is switched from the source base station 1 to the target base station 1 at a future moment.

### Implementation a1-1:

Because the satellite is moving, and compared with the satellite, a moving speed of the UE 1 is relatively slow, which may be ignored. Therefore, in a possible implementation, the first communication apparatus may estimate, based on the location information of the UE 1 at the first moment and the moving track of the first satellite, whether the UE 1 is switched from the source base station 1 to the target base station 1 at a future moment.

For example, the UE 1 is located at a location 1 at the first moment, and the location 1 belongs to the signal coverage area of the first satellite at the first moment. When estimating that the location 1 (or a location near the location 1) of the UE 1 belongs to the signal coverage area of the second satellite at the second moment, the first communication apparatus estimates that the UE 1 is switched from the source base station 1 to the target base station 1 at the second moment.

Whether the UE 1 is switched from the source base station 1 to the target base station 1 at the second moment may be estimated based on the location information of the UE 1 at the current moment, so that complexity of the solution can be reduced. The location information of the UE 1 at the first moment may be provided by the UE 1 or another apparatus for the first communication apparatus.

### Implementation a 1-2:

In still another possible implementation, the first communication apparatus may infer a location 2 of the UE 1 at the second moment based on moving track information of the UE 1 within a period of time. When the first communication apparatus predicts that the location 2 of the UE 1 belongs to the signal coverage area of the second satellite at the second moment, the first communication apparatus estimates that the UE 1 is switched from the source base station 1 to the target base station 1 at the second moment.

The location of the UE 1 at the second moment may be estimated based on the moving track of the UE 1, and whether the UE 1 is switched from the source base station 1 to the target base station 1 at the second moment is estimated based on the location of the UE 1 at the second moment, thereby improving accuracy of an estimation result.

In this embodiment of this application, the location of the UE 1 at the second moment may be further determined by using movement rule information of the UE 1 in a period of time. For example, the location of the UE 1 at the second moment may be predicted based on an expected behavior (expected UE behaviour) of the UE 1, that is, movement rules of the UE 1 at different times. The information of the location 2 of the UE 1 at the second moment may be predicted by the first communication apparatus, or may be predicted by another apparatus and then sent to the first communication apparatus.

In this embodiment of this application, in a possible implementation, the location of the UE 1 at the first moment does not belong to the second satellite coverage area. Alternatively, the UE 1 does not satisfy a base station switching condition at the first moment. In this way, preparation for subsequent switching of the UE 1 may be made in advance at a specific time. The base station switching condition in this embodiment of this application may be a condition under which the UE 1 needs to be switched to another satellite. For example, when the UE 1 meets the base station switching condition, the source base station determines that the UE 1 needs to be switched to the target base station 1 on the second satellite. In this case, the switching procedure of the UE 1 needs to be started.

It can be learned that, in the solution provided in this embodiment of this application, whether the UE 1 is switched to the target base station 1 in the future may be estimated in advance, instead of making preparations only when it is detected that the UE 1 needs to be switched to the target base station 1 (for example, the UE 1 meets the base station switching condition). In other words, there is a specific time difference between the first moment and the second moment. In this way, some content that originally needs to be performed in the switching procedure of the UE 1 may be performed in advance (for example, N3 tunnel information may be configured for the UE 1 in advance on the target base station 1 and the target UPF 1). Therefore, a quantity of signaling that needs to be performed in the switching procedure of the UE 1 can be reduced, and a delay of the switching procedure of the UE 1 can be reduced.

In still another possible implementation, the time difference between the second moment and the first moment may be equal to a preset time difference threshold. For example, if the time difference threshold is five minutes, the first communication apparatus sends the first request message when it is estimated that the UE 1 will be switched from the source base station 1 to the target base station 1 after five minutes. However, when the first communication apparatus estimates that the UE 1 is switched from the source base station 1 to the target base station 1 after more than five minutes (for example, 1 hour), the first communication apparatus temporarily does not send the first request message until it estimates that the UE 1 is switched from the source base station 1 to the target base station 1 after five minutes. When next switching of the UE 1 is estimated quite early, the estimation is likely to be inaccurate because a time in advance is relatively long. Therefore, accuracy of estimating switching of the UE 1 can be improved by setting the time difference threshold.

It should be noted that the first communication apparatus may simultaneously determine that a plurality of terminal devices are to be switched to another satellite after five minutes. In this case, the first communication apparatus may send first request messages corresponding to the plurality of terminal devices at a time, or may send the first request messages in batches, for example, may send first request messages corresponding to one or more terminal devices in the plurality of terminal devices at a time. For a processing procedure of the first communication apparatus for one of the plurality of terminal devices, refer to related content of the UE 1. Details are not described again.

In an implementation a2, the first communication apparatus may estimate, based on a message sent by another apparatus, that the UE 1 is switched from a source access network device to a first target access network device at a future moment.

For example, the first communication apparatus may receive a second request message, and estimate, based on the received second request message, that the UE 1 is switched from the source access network device to the first target access network device at a future moment. The second request message indicates that the UE 1 is estimated to be switched from the source base station 1 to the target base station 1 at a future moment.

In other words, in the implementation a2, another apparatus may predict whether the UE 1 is switched from the source base station 1 to the target base station 1. When the another apparatus estimates that the UE 1 is switched from the source base station 1 to the target base station 1 at a future moment, the another apparatus sends the second request message to the first communication apparatus.

In this embodiment of this application, there may be a plurality of implementations in which the second request message indicates that the UE 1 is estimated to be switched from the source base station 1 to the target base station 1 at a future moment. For example, the second request message may include indication information indicating that the UE 1 is estimated to be switched from the source base station 1 to the target base station 1 at a future moment.

For another example, the second request message may not include the indication information, but the second request message has an indication function. For example, the second request message is sent by the target base station 1 to the first communication apparatus, and the second request message indicates that the UE 1 is switched at a future moment. Because the second request message is from the target base station 1, the first communication apparatus may determine that the UE 1 is switched to the target base station 1 at a future moment. Further, the first communication apparatus knows in advance that the UE 1 is originally served by the source base station 1, and therefore, the first communication apparatus may estimate, based on the second request message, that the UE 1 is switched to the target base station 1 at a future moment.

The first communication apparatus and the second communication apparatus shown in FIG. 4a may be specifically implemented in a plurality of forms. The following describes several implementations by using examples.

FIG. 4b-1 to FIG. 4b-3 show an example of a procedure entity of still another possible satellite switching method. In the solution shown in FIG. 4b-1 to FIG. 4b-3, a first communication apparatus is an AMF, and a second communication apparatus is an SMF.

As shown in FIG. 4b-1 to FIG. 4b-3, the method includes the following steps.

Step 411: The AMF sends a first request message to the SMF.

Correspondingly, the SMF receives the first request message.

Step 412: The SMF sends a fifth request message to a target UPF 1.

Correspondingly, the target UPF 1 receives the fifth request message.

The fifth request message requests to establish a context of a PDU session in the target UPF 1. In this embodiment of this application, the context of the PDU session may be understood as an N4 session context of the PDU session.

In step 412, the SMF sends the fifth request message in a plurality of manners. For example, the SMF may directly send the fifth request message to the target UPF 1. For another example, the SMF may transfer the fifth request message to the target UPF 1 by using another apparatus.

Step 413: The target UPF 1 configures a context of a PDU session for a UE 1.

Step 414: The target UPF 1 sends a fifth response message to the SMF.

The SMF receives the fifth response message from the target UPF 1.

The fifth response message indicates that the target UPF 1 has configured the context of the PDU session.

Step 415: The SMF triggers, by using the AMF, a target base station 1 to configure a context of a PDU session for the UE 1.

In a possible implementation, the target base station 1 further needs to learn of CN N3 tunnel information in the context of the PDU session configured by the target UPF 1 for the UE 1, and the target UPF 1 also needs to learn of AN N3 tunnel information in the context of the PDU session configured by the target base station 1 for the UE 1, to implement communication between the target base station 1 and the target UPF 1. There may be a plurality of specific learning solutions. For example, the SMF may send the CN N3 tunnel information to the target base station 1, and the SMF sends the AN N3 tunnel information to the target UPF 1. For a specific transmission manner, refer to subsequent content. Details are not described herein.

Step 416: The SMF returns a first response message to the AMF, where the first response message indicates that pre-switching of the UE 1 is completed.

When the UE 1 needs to be switched to the target base station 1 subsequently, it indicates that the first communication apparatus performs estimation correctly. In this case, a switching procedure shown in step 417 to step 420 may be performed.

Step 417: The target base station 1 receives an RRC reconfiguration completion indication message from the UE 1.

Step 418: The target base station 1 sends a first path switching request message to the AMF.

Correspondingly, the AMF receives the first path switching request message from the target base station 1.

In a possible implementation, if the target base station 1 determines that pre-switching of the UE 1 has been completed, the target base station 1 may indicate, by using the first path switching request message, that the first terminal device has been switched. In a possible implementation, the first path switching request message may further indicate that the PDU session is switched (that the PDU session is switched may be understood as that a switched user plane path of the PDU session has been established). In this way, another apparatus does not need to prepare for switching of the UE 1.

In this embodiment of this application, the establishing a user plane path may include: The target base station 1 configures the context of the PDU session for the UE 1; the target UPF 1 configures the context of the PDU session for the UE 1; the target base station 1 learns of the CN N3 tunnel information in the context of the PDU session that is configured by the target UPF 1 for the UE 1; the target UPF 1 learns of the AN N3 tunnel information in the context of the PDU session that is configured by the target base station 1 for the UE 1; and the like.

Step 419: The AMF sends a third request message to the SMF.

Correspondingly, the SMF receives the third request message from the AMF.

In a possible implementation, the third request message indicates that the PDU session has been switched (that the PDU session has been switched may be understood as that a switched user plane path of the PDU session has been established). In this way, the SMF may determine that the UE 1 has completed pre-switching, and may directly return a third response message.

In still another possible implementation, the third request message does not indicate that the PDU session has been switched, but indicates that the PDU session is to be switched (which may be understood as that the third request message may further indicate that the user plane path of the PDU session is to be established). In this case, the SMF may determine again whether pre-switching has been completed for the UE 1 (for example, whether the user plane path of the PDU session has been established). If pre-switching has been completed, the SMF may directly return the third response message.

Step 420: The SMF sends the third response message to the AMF.

Correspondingly, the AMF receives the third response message from the SMF. The third response message indicates that the updating of the context of the PDU session is completed.

When the UE1 needs to be switched to the target base station 2 subsequently, it indicates that the first communication apparatus fails to perform estimation. In this case, a switching procedure shown in step 421 to step 427 may be performed.

Step 421: The target base station 2 receives the RRC reconfiguration completion indication message from the UE 1.

Step 422: The target base station 2 sends a second path switching request message to the AMF.

Correspondingly, the AMF receives the second path switching request message from the target base station 2.

The second path switching request message may include PDU session information of a to-be-established user plane path.

Step 423: The AMF sends a fourth request message to the SMF.

Correspondingly, the SMF receives the fourth request message from the AMF.

The fourth request message indicates that the PDU session is to be switched (that the to-be-switched PDU session may be understood as that a switched user plane path of the PDU session is to be established).

Step 424: The SMF sends a sixth request message to a target UPF 2.

Correspondingly, the target UPF 2 receives the sixth request message. The sixth request message requests to configure the context of the PDU session in the target UPF 2.

Step 425: The target UPF 2 configures a context of a PDU session for the UE 1.

Step 426: The target UPF 2 sends a sixth response message to the SMF.

Correspondingly, the SMF receives the sixth response message from the target UPF 2.

Step 427: The SMF triggers, by using the AMF, the target base station 2 to configure a context of a PDU session for the UE 1.

In a possible implementation, the target base station 1 further needs to learn of CN N3 tunnel information in the context of the PDU session configured by the target UPF 1 for the UE 1, and the target UPF 1 also needs to learn of AN N3 tunnel information in the context of the PDU session configured by the target base station 1 for the UE 1, to implement communication between the target base station 1 and the target UPF 1. There may be a plurality of specific learning solutions. For example, the SMF may send the CN N3 tunnel information to the target base station 1, and the SMF sends the AN N3 tunnel information to the target UPF 1. For a specific transmission manner, refer to subsequent content. Details are not described herein.

Step 428: The SMF returns a fourth response message to the AMF, where the fourth response message indicates that switching of the UE 1 is completed.

It can be learned from the foregoing content that, in actual application, there may be an estimation error. For example, in a pre-switching procedure, the first communication apparatus estimates that the UE 1 is switched to the target base station 1 of the second satellite. However, in the switching procedure, due to some reasons (for example, a satellite moves or the UE 1 moves), the UE 1 needs to be switched to the target base station 2 deployed on a fourth satellite. In this case, in the switching procedure, the SMF still needs to reconfigure a context of the PDU session for the UE 1. When the prediction fails, the source base station needs to use the target base station 2 deployed on the fourth satellite as a new target base station, and use a UPF deployed on the fourth satellite as a new target UPF (the new target UPF may be referred to as the target UPF 2) to perform a switching procedure. In this case, for a solution of the switching procedure, refer to the solution shown in FIG. 3. This is similar to the solution shown in FIG. 3, and details are not described again. It should be noted that, when the prediction fails, a session management context update request message sent by the AMF to the SMF may indicate that the PDU session of the UE 1 is to be switched (that the PDU session to be switched may be understood as that a switched user plane path of the PDU session is to be established).

FIG. 4c-1 to FIG. 4c-3 show an example of a procedure entity of still another possible satellite switching method. In the solution shown in FIG. 4b-1 to FIG. 4b-3, a first communication apparatus is a source base station 1, and a second communication apparatus is a target base station 1.

As shown in FIG. 4b-1 to FIG. 4b-3, the method includes the following steps.

Step 431: The source base station 1 sends a first request message to the target base station 1.

Correspondingly, the target base station 1 receives the first request message.

Step 432. The target base station 1 configures a context of a PDU session for a UE 1.

Step 433: The target base station 1 sends a seventh request message to an AMF.

Correspondingly, a target UPF 1 receives a fifth request message.

The seventh request message includes information about a tunnel configured by a first target access network device for the PDU session, and the seventh request message indicates that the UE 1 is estimated to be switched at a future moment.

Step 434: The AMF sends an eighth request message to an SMF.

Correspondingly, the SMF receives the eighth request message from the AMF. The eighth request message includes the information about the tunnel configured by the first target access network device for the PDU session, and the eighth request message indicates that the PDU session of the UE 1 is estimated to be switched at a future moment.

Step 435: The SMF triggers the target UPF 1 to configure a context of a PDU session for the UE 1.

Step 436: The SMF returns an eighth response message to the AMF.

Correspondingly, the AMF receives the eighth response message. The eighth response message indicates that pre-switching of the UE 1 is completed.

Step 437: The AMF sends a seventh response message to the target base station 1.

Correspondingly, the target base station 1 receives the seventh response message. The seventh response message indicates that pre-switching of the UE 1 is completed.

Step 438: The target base station 1 sends a first response message to the source base station 1.

Correspondingly, the source base station 1 receives the first response message.

In a possible implementation, the first response message further includes radio access control RRC configuration information required for the UE 1 to access the first target access network device. In this way, the first target access network device may send, to a source access network device in a pre-switching phase, the RRC configuration information required by the UE 1, so that signaling that needs to be consumed because the RRC configuration information needs to be obtained in the switching procedure can be reduced, and a delay of the switching procedure can be further reduced.

When theUE 1 needs to be switched to the target base station 1 subsequently, it indicates that the first communication apparatus performs estimation correctly. In this case, the switching procedure shown in step 417 to step 420 may be performed.

When the target base station 1 needs to be switched to a target base station 2 subsequently, it indicates that the first communication apparatus fails to perform estimation. In this case, the switching procedure shown in step 421 to step 427 may be performed.

It can be learned from the foregoing content that when the second communication apparatus is the target base station 1, the target base station 1 may make some preparations for switching of the UE 1 based on the first request, for example, trigger a procedure of creating a context for one or more PDU sessions of the UE 1. For example, as shown in FIG. 4c-1 to FIG 4c-3, the target base station 1 sends the seventh request message to the AMF, to indicate that the UE 1 is estimated to be switched at a future moment, and the message includes PDU session information to be switched together with the UE 1. For another example, the target base station 1 sends a pre-switching request message to the target UPF 1, and the message includes PDU session information to be switched together with the UE 1. For detailed content of this example, refer to subsequent descriptions. Details are not described herein.

Based on the foregoing content, FIG. 5A to FIG. 5C are an example of a schematic flowchart of still another satellite switching method according to an embodiment of this application. In FIG. 5A to FIG. 5C, an example in which a first communication apparatus is an AMF and a second communication apparatus is an SMF is used for illustration. The solution shown in FIG. 5A to FIG. 5C includes a pre-switching procedure and a switching procedure. In FIG. 5A to FIG. 5C, an example in which step 501 to step 505 are the pre-switching procedure of a UE 1, and step 506 to step 522 are the switching procedure of the UE 1 is used for description.

As shown in FIG. 5A to FIG. 5C, the method includes the following steps.

Step 501: The AMF estimates that the UE 1 is switched from a source base station 1 to a target base station 1 at a future moment.

For related content of step 501, refer to related content of step 401 in FIG. 4a. Details are not described again.

Step 502: The AMF sends a first request message to the SMF (in FIG. 5A to FIG. 5C, an example in which the first request message is a session management context update request message b0 for illustration).

Correspondingly, the SMF receives the session management context update request message b0.

The session management context update request message b0 indicates that a PDU session of the UE 1 is estimated to be switched at a future moment.

Optionally, the session management context update request message b0 may be an Nsmf_PDUSession_SMContextUpdate Request message.

It should be noted that the UE 1 may have a plurality of PDU sessions, and the plurality of PDU sessions may be managed by a plurality of SMFs, or may be managed by one SMF. This is not limited in this embodiment of this application. In this embodiment of this application, the AMF may send the first request message to an SMF corresponding to each PDU session to be switched. In this embodiment of this application, one PDU session is used as an example for description. A switching procedure of another PDU session is similar to that of the PDU session. Details are not described again.

In a possible implementation, the first request message includes at least one of information about a target base station 1 (for example, identification information of the target base station 1), information about a target UPF 1 (for example, identification information of the target UPF 1), or information about a second satellite (for example, an identifier of the second satellite). The target UPF 1 and the target base station 1 are deployed on the second satellite.

When the first request message includes the information about the target base station 1, the SMF may select a UPF deployed on a same satellite as the target base station 1 as the target UPF 1.

When the first request message includes the information about the second satellite, the SMF may select a UPF deployed on the second satellite as the target UPF 1.

When the first request message includes the information about the target UPF 1, the SMF may determine the target UPF 1 based on the first request message.

Step 503a: The SMF selects a target UPF 1 deployed on a same satellite as the target base station 1 as a new UPF of the UE 1, and sends a session management context update response message b1 to the AMF.

Correspondingly, the AMF receives the session management context update response message b1.

In a possible implementation, the SMF may allocate N3 tunnel information of the PDU session to the target UPF 1, and send the allocated N3 tunnel information of the PDU session to the target UPF 1, where the tunnel information may be included in a rule and sent to the target UPF 1. In this embodiment of this application, a N3 tunnel of the target UPF 1 may also be referred to as a core network (core network, CN) N3 tunnel.

In a possible implementation, the session management context update response message b1 may include N2 session management information. The N2 session management information in this embodiment of this application may be transparently transmitted by the AMF to the target base station 1. When the SMF allocates CN N3 tunnel information to the target UPF 1, the N2 session management information may also include the CN N3 tunnel information. In this way, after the AMF transparently transmits the N2 session management information to the target base station 1 in step 503b, the target base station 1 may obtain the CN N3 tunnel information from the N2 session management information.

In a possible implementation, the N2 session management information may further include an N4 container, and the N4 container may include an N4 session establishment request message. The fifth request message sent by the SMF to the target UPF 1 in this embodiment of this application may be the N4 session establishment request message. The N4 session establishment request message is a message that the SMF needs to send to the target UPF 1, and the AMF and the target base station 1 may transparently transmit the N4 container. In a possible implementation, the N4 session establishment request message includes a rule of the CN N3 tunnel information.

When the SMF allocates Nx tunnel information to the target UPF 1, the N4 session establishment request message in the session management context update response message b1 may further include a rule for allocating the Nx tunnel information to the target UPF 1.

In still another possible implementation, the N4 session establishment request message in the session management context update response message b1 may further include Nx tunnel information of a UPF 2, so that the target UPF 1 and the UPF 2 communicate based on the Nx tunnel information of the target UPF 1 and the Nx tunnel information of the UPF 2.

Optionally, if pre-switching has been performed on a UE 2, but true switching has not been performed (that is, the UE 2 has performed the pre-switching procedure before the UE 1, but has not performed the switching procedure), the Nx tunnel information of the UPF 2 may be Nx tunnel information of a UPF (which may be referred to as a target UPF 2 of the UE 2) that provides a service for the switched UE 2. In still another possible implementation, because pre-switching has occurred on the UE 2, but true switching has not occurred yet, the SMF may send, to the target UPF 1, the Nx tunnel information of the UPF currently serving the UE 2 and Nx tunnel information of a UPF that is estimated in a pre-switching procedure of the UE 2 and that is to serve the UE 2.

If pre-switching does not occur on the UE 2, the Nx tunnel information of the UPF 2 may be Nx tunnel information of a UPF currently serving the UE 2. Optionally, if the UE 2 has completed the switching procedure, the Nx tunnel information of the UPF 2 may be Nx tunnel information of a UPF currently serving the UE 2 (that is, a UPF that provides a service for the switched UE 2).

Step 503b: The AMF sends a pre-switching request message b2 to the target base station 1.

Correspondingly, the target base station 1 receives the pre-switching request message b2 from the AMF.

In a possible implementation, in step 503b, the pre-switching request message b2 sent by the AMF to the target base station 1 includes the N2 session management information carried in the session management context update response message b1.

Step 503c: The target base station 1 sends a pre-switching request message b3 to the target UPF 1.

Correspondingly, the target UPF 1 receives the pre-switching request message b3 from the target base station 1.

In a possible implementation, the target base station 1 may configure a context for a PDU session of the UE 1, for example, allocate a CN N3 tunnel to the UE 1. In this embodiment of this application, the N3 tunnel on the target base station 1 side may also be referred to as an access network (access network, AN) N3 tunnel. In this embodiment of this application, AN N3 tunnel information and CN N3 tunnel information may be used for communication between the target base station 1 and the target UPF 1.

In a possible implementation, the pre-switching request message b3 may carry the AN N3 tunnel information. The pre-switching request message b3 may further include the N4 container in the session management context update response message b1.

Step 503d: The target UPF 1 sends a pre-switching response message b4 to the target base station 1.

Correspondingly, the target base station 1 receives the pre-switching response message b4 from the target UPF 1.

The pre-switching response message b4 may indicate that the target UPF 1 completes pre-switching.

The pre-switching response message b4 may include the N4 container, and the N4 container includes an N4 session establishment response message. The pre-switching response message is sent by the target UPF 1 to the target base station 1, and the N4 container is sent by the target UPF 1 to the SMF. The N4 session establishment response message may be an example of the fifth response message mentioned in embodiments of this application.

In a possible implementation, the N4 session establishment response message may include the AN N3 tunnel information.

Step 503e: The target base station 1 sends a pre-switching response message b5 to the AMF.

Correspondingly, the AMF receives the pre-switching response message b5 from the target base station 1.

The pre-switching response message b5 may indicate that the target base station 1 completes pre-switching.

In a possible implementation, the pre-switching response message b5 may include the N2 session management information, the N2 session management information may include the N4 container included in the pre-switching response message b4 in step 503d, and the N4 container includes the N4 session establishment response message.

In a possible implementation, when the N4 session establishment response message includes a rule of the AN N3 tunnel information, the N2 session management information may not include the AN N3 tunnel information.

In still another possible implementation, when the N4 session establishment response message does not include the rule of the AN N3 tunnel information, the N2 session management information may include the rule of AN N3 tunnel information.

Step 503f: The AMF sends a session management context update request message b6 to the SMF.

Correspondingly, the SMF receives the session management context update request message b6 from the AMF.

The session management context update request message b6 may indicate that pre-switching of the PDU session is completed.

In a possible implementation, the session management context update request message b6 includes the N2 session management information, the N2 session management information may include the N4 container included in the pre-switching response message b4, and the N4 container includes the N4 session establishment response message.

Step 504: The SMF sends a session management context update response message b7 to the AMF.

Correspondingly, the AMF receives the session management context update response message b7 from the SMF. The session management context update response message b7 may indicate that updating of the context of the PDU session of the UE 1 is completed. The session management context update response message b7 may be an example of the first response message mentioned in embodiments of this application.

It should be noted that step 503a to step 503f are described by using an example in which the SMF allocates the CN N3 tunnel information to the UPF 1. In still another possible implementation, the target UPF 1 may allocate a CN N3 tunnel and/or an Nx tunnel. A difference from the example shown in FIG. 5A to FIG. 5C is as follows.

When the target UPF 1 allocates the CN N3 tunnel and the Nx tunnel, the N4 container in the session management context update request response message in step 503a no longer carries the CN N3 tunnel information and the Nx tunnel information. After receiving the pre-switching request message b2, the target UPF 1 may allocate the CN N3 tunnel and the Nx tunnel, and include the CN N3 tunnel information and the Nx tunnel information in the N4 response message in the pre-switching response message b2.

For a rule transmission manner including the AN N3 tunnel information, refer to the content shown in FIG. 5A to FIG. 5C. Details are not described again.

Step 505: The SMF sends an N4 session update request message b8 to the UPF 2.

Step 505 is an optional step. In addition, step 505 may be performed in a pre-switching procedure, or may be performed in a subsequent switching procedure.

The N4 session update request message b8 in step 505 carries the Nx tunnel information on the target UPF 1 side, so that after the UE 1 completes switching, the UE 2 may communicate with the UE 1 by using the UPF 2 and the target UPF 1.

Step 506: The source base station 1 determines that the UE 1 needs to be switched to the target base station 1.

In step 506, the source base station may determine, in a plurality of manners, that the UE 1 needs to be switched to the target base station 1. This is not limited in this application. For example, the source base station may determine, based on a measurement report provided by the UE 1, whether the UE 1 meets the switching condition, so as to determine that the UE 1 needs to be switched to the target base station 1.

Step 507: The source base station 1 sends a switching request message to the target base station 1.

Correspondingly, the target base station 1 receives the switching request message.

Step 508: The target base station 1 sends a switching response message to the source base station 1.

Correspondingly, the source base station 1 receives the switching response message.

The switching response message may include a transparent transmission container sent by the target base station 1 to the UE 1, and the transparent transmission container includes an RRC reconfiguration message.

Step 509: The source base station 1 sends the RRC reconfiguration message to the UE 1.

Correspondingly, the UE 1 receives the RRC reconfiguration message.

The RRC reconfiguration request message is an RRC reconfiguration message sent by the target base station 1 to the UE 1.

Step 510: The UE 1 performs synchronization with the target base station 1.

Step 511: The UE 1 sends an RRC reconfiguration completion message to the target base station 1.

Correspondingly, the target base station 1 receives the RRC reconfiguration completion message.

Step 512: The target base station 1 sends a path switching request message to the AMF.

Correspondingly, the AMF receives the path switching request message.

Implementation 1: The path switching request message indicates that the PDU session of the UE 1 has been switched (that the PDU session has been switched may be understood as that a switched user plane path of the PDU session has been established). In this case, the first path switching request message mentioned in this embodiment of this application may be the path switching request message in step 512.

For example, indication information may be added to the path switching request message sent by the target base station 1, and the indication information indicates that the PDU session of the UE 1 has been switched. In this case, the path switching request message sent by the target base station 1 may reuse a path switching request message defined in a current standard, and indication information indicating that the PDU session has been switched may be carried in an old information element or another new information element of the path switching request message.

For another example, the target base station 1 may newly define a path switching request message. The path switching request message itself has a meaning of indicating the PDU session of the UE 1, and does not need to add, to the path switching request message, indication information indicating that the PDU session of the UE 1 has been switched.

Implementation 2: The path switching request message indicates that the UE 1 has been switched.

In the implementation 2, the target base station 1 may not additionally add, to the path switching request message, the indication information indicating that the PDU session has been switched, and may reuse the path switching request message in the current standard. A subsequent AMF or SMF determines whether a context needs to be configured for switching of the PDU session.

In the implementation 1 and the implementation 2, in a possible implementation, the target base station 1 may further send, to the AMF, a list of established PDU sessions of the user plane path, to indicate that the user plane path of the PDU session in the PDU session list has been established. The PDU session list may be carried in the path switching request message.

For example, the first path switching request message may carry a list of activated PDU sessions on a user plane, and a PDU session in the list of activated PDU sessions on the user plane is a PDU session that has been established on the user plane path. In this case, if the first communication apparatus determines that a PDU session is included in the list of activated PDU sessions on the user plane, the first communication apparatus may determine that a switched user plane path of the PDU session has been established.

For another example, the first path switching request message may carry a list of to-be-activated PDU sessions on the user plane, and a PDU session in the list of to-be-activated PDU sessions on the user plane is a PDU session whose user plane path has not been established. In this case, if the first communication apparatus determines that a PDU session is not included in the list of to-be-activated PDU sessions on the user plane, the first communication apparatus may consider by default that a switched user plane path of the PDU session has been established. In this application, that the user plane path has been established may be understood as that the user plane has been activated.

In this way, another subsequent network element or apparatus does not need to determine whether a context has been configured for switching of the PDU session of the UE 1, and may determine, based on the PDU session list in step 512, that the UE 1 has been successfully switched to a first target access network device, and a related user plane path has been established. In other words, the SMF does not need to interact with the UPF or the base station to establish a user plane.

Step 513: The AMF sends a session management context update request message b9 to the SMF.

Correspondingly, the SMF receives the session management context update response message b9.

The session management context update request message b9 is used to notify the SMF that the PDU session is switched. The session management context update request message b9 may be an example of the third request message mentioned in embodiments of this application.

In a possible implementation, when the path switching request message in step 512 indicates that the PDU session of the UE 1 has been switched (which may be understood as that the switched user plane path of the PDU session has been established), the session management context update request message b9 sent by the AMF in step 513 may carry indication information indicating that the PDU session of the UE 1 has been switched. In this way, when receiving the indication information, the SMF does not need to trigger another apparatus to configure a context for the PDU session.

In still another possible implementation, the path switching request message in step 512 reuses an existing path switching request message. When the AMF determines that a related context has been configured for the PDU session of the UE 1 to be migrated to the target base station 1 (that is, the pre-switching procedure has been completed), the session management context update request message b9 sent by the AMF in step 513 may carry indication information indicating that the PDU session of the UE 1 has been switched. In this way, when receiving the indication information, the SMF does not need to trigger another apparatus to configure a context for the PDU session.

In still another possible implementation, the path switching request message in step 512 reuses an existing path switch request message, and the session management context update request message b9 sent by the AMF in step 513 may reuse a session management context update request message defined in an existing standard. After receiving the message, the SMF may determine, by itself, whether another apparatus needs to be triggered to configure a context for the PDU session.

Step 514: The SMF sends a session management context update response message b10 to the AMF. Correspondingly, the AMF receives the session management context update response message b10.

In a possible implementation, when the session management context update request message b10 received by the SMF in step 513 indicates that the PDU session of the UE 1 has been switched (which may be understood as that a switched user plane path of the PDU session has been established), the SMF does not need to determine whether another apparatus needs to be triggered to configure a context for the PDU session.

In still another possible implementation, when the session management context update request message b9 received by the SMF in step 513 indicates that the PDU session of the UE 1 is to be switched (that the PDU session to be switched may be understood as that a switched user plane path of the PDU session is to be established), after receiving the indication information, the SMF may determine, by itself, whether another apparatus needs to be triggered to configure a context for the PDU session. When the SMF determines that a related context has been configured for the PDU session of the UE 1 to be migrated to the target base station 1 (or the target UPF 1)

(in other words, a pre-switching procedure has been completed), the SMF determines that another apparatus does not need to be triggered to configure a context for the PDU session.

Step 515: The AMF sends a path switching response message to the target base station 1.

Correspondingly, the target base station 1 receives the path switching response message.

It can be learned from the foregoing content that, because the pre-switching procedure is performed in advance, it is predicted that the PDU session of the UE 1 is to be switched to the target base station 1 at a future moment. Therefore, some preparations are made for switching in advance, for example, a context of the PDU session of the UE 1 is created on the target base station 1 and the target UPF 1. Then, when the UE 1 is really initiating the switching procedure, if the UE 1 is switched to the target base station 1 in the switching procedure, it indicates that the prediction is correct. In this way, in the switching procedure, a context of the PDU session of the UE 1 does not need to be created again, but a context configured in the pre-switching procedure is used. Therefore, a quantity of signaling interactions in the switching procedure can be reduced, and in particular, a quantity of signaling interactions between the SMF and the target base station 1 and the target UPF 1 that are deployed on the satellite in the switching procedure can be reduced. In this way, a delay of a switching procedure can be reduced, and especially when a large quantity of terminal devices perform a switching procedure in a centralized manner, beneficial effects brought by this embodiment of this application are more obvious.

Based on the content shown in FIG. 5A to FIG. 5C, FIG. 6A to FIG. 6C are an example of a schematic flowchart of still another satellite switching method. As shown in FIG. 6A to FIG. 6C, after the UE 1 is pre-switched, or after the SMF sends the Nx tunnel information of the UPF 2 of the UE 2 to the target UPF 1, the UE 2 is also pre-switched. For example, in step 520, the UE 2 performs a pre-switching procedure, and the UE 2 is to be switched to a base station 3 and a UPF 3 of a fifth satellite. In this case, the SMF may obtain tunnel information of the UPF 3 of the UE 2.

Specifically, the SMF obtains the tunnel information of the UPF 3 of the UE 2 in a plurality of manners. For example, the SMF receives a first update message, and the first update message includes the Nx tunnel information of the UPF 3 of the UE 2. The first update message may be sent by the UPF 3 to the SMF, or may be sent by an SMF corresponding to the PDU session of the UE 2 to the SMF (which may also be referred to as an SMF corresponding to the UE 2). This is not limited in this embodiment of this application.

Further, the SMF can send the Nx tunnel information to the target UPF 1, so that the target UPF 1 communicates with the UPF 3 based on the Nx tunnel information. It should be noted that, before pre-switching of the UE 2, the UE 1 first initiates a pre-switching procedure. Therefore, in the pre-switching procedure of the UE 2, the Nx tunnel information obtained by the UPF 3 of the UE 2 is already the Nx tunnel information of the target UPF 1. Therefore, the UPF 3 may communicate with the target UPF 1 in a subsequent procedure based on the Nx tunnel information of the target UPF 1. In still another possible implementation, because the UE 1 is not switched in the pre-switching procedure of the UE 2, the SMF may also send source Nx tunnel information of the UE 1 to the UPF 3.

Specifically, the SMF sends the Nx tunnel information to the target UPF 1 in a plurality of manners. For example, the SMF may send the obtained Nx tunnel information of the UPF 3 to the UPF 1 by using step 514, step 515, and step 521.

For example, the SMF may include the N4 container in step 514, and the N4 container may carry the Nx tunnel information of the UPF 3. The N4 container is transparently transmitted to the target UPF 1 by AMF and target base station 1. A switching request message b11 sent by the target base station 1 to the target UPF 1 in step 521 may include the N4 container. A switching response message b12 sent by the target UPF 1 to the target base station 1 in step 522 may indicate that the Nx tunnel information of the UPF 3 has been received.

In still another possible implementation, after the UE 2 performs the pre-switching procedure, or after the SMF obtains the Nx tunnel information configured by the UPF 3 for the UE 2, the SMF may send the Nx tunnel information of the UPF 3 to the target UPF 1 before step 514. This is not limited in this embodiment of this application.

Based on the content shown in FIG. 5A to FIG. 5C or FIG. 6A to FIG. 6C, FIG. 7A to FIG. 7C are an example of a schematic diagram of still another possible method in a pre-switching procedure. Compared with FIG. 5A to FIG. 5C or FIG. 6A to FIG. 6C, a difference in FIG. 7A to FIG. 7C lies in that in the pre-switching procedure, after the SMF receives the session management context update request message b0 sent by the AMF by using step 502, in this embodiment of this application, a context is configured for the PDU session of the UE 1 by using steps 601a to 601i. A switching procedure of the UE 1 in the solution shown in FIG. 7A to FIG. 7C is consistent with content in FIG. 5A to FIG. 5C or FIG. 6A to FIG. 6C, and details are not described again.

As shown in FIG. 7A to FIG. 7C, after step 502, the method may further include the following steps.

Step 601a: The SMF selects a target UPF 1 deployed on a same satellite as the target base station 1 as a new UPF of the UE 1, and sends an N4 session establishment request message c 1 to the target UPF 1.

Correspondingly, the target UPF 1 receives the N4 session establishment request message c1.

In a possible implementation, when there is an Nx tunnel for the PDU session of the UE 1, the N4 session establishment request message c1 may include a rule of Nx tunnel information of the UPF 2.

In a possible implementation, when the SMF allocates the CN N3 tunnel to the target UPF 1, the N4 session establishment request message c1 may further include a rule of the CN N3 tunnel information.

In a possible implementation, when the SMF allocates the Nx tunnel to the target UPF 1, the N4 session establishment request message c1 may further include a rule of the Nx tunnel information.

Step 601b: The target UPF 1 sends an N4 session establishment response message c2 to the SMF.

Correspondingly, the SMF receives the N4 session establishment response message c2.

In a possible implementation, when the SMF does not allocate the CN N3 tunnel to the target UPF 1, and the target UPF 1 allocates the CN N3 tunnel to the target UPF 1, the N4 session establishment response message c2 may include the CN N3 tunnel information.

In still another possible implementation, when the SMF does not allocate the Nx tunnel to the target UPF 1, and the target UPF 1 allocates the Nx tunnel to the target UPF 1, the N4 session establishment response message c2 may include the Nx tunnel information.

Step 601c: The SMF sends a session management context update response message c3 to the AMF.

Correspondingly, the AMF receives the session management context update response message c3.

In a possible implementation, the session management context update response message c3 may include the N2 session management information. The N2 session management information in this embodiment of this application may be transparently transmitted by the AMF to the target base station 1. The N2 session management information in the session management context update response message c3 may include the CN N3 tunnel information.

Step 601d: The AMF sends a pre-switching request message c4 to the target base station 1.

Correspondingly, the target base station 1 receives the pre-switching request message c4.

The pre-switching request message c4 may carry the N2 session management information in the session management context update response message c3. In this way, the target base station 1 may obtain the CN N3 tunnel information from the pre-switching request message c4.

Step 601e: The target base station 1 sends a pre-switching response message c5 to the AMF.

Correspondingly, the AMF receives the pre-switching response message c5.

The pre-switching response message c5 may include the AN N3 tunnel information of the target base station 1.

In a possible implementation, the pre-switching response message c5 may carry the N2 session management information, and the N2 session management information may include the AN N3 tunnel information.

In still another possible implementation, the pre-switching response message c5 includes the rule of the AN N3 tunnel information.

Step 601f: The AMF sends a session management context update request message c6 to the SMF.

Correspondingly, the SMF receives the session management context update request message c6.

In a possible implementation, the session management context update request message c6 carries the N2 session management information carried in the pre-switching response message c5. The N2 session management information may include the AN N3 tunnel information, so that the SMF determines the AN N3 tunnel information based on the N2 session management information.

Step 601g: The SMF sends an N4 session update request message c7 to the target UPF 1.

Correspondingly, the target UPF 1 receives the N4 session update request message c7.

The N4 session update request message c7 includes the AN N3 tunnel information. For example, the N4 session update request message includes the rule of the AN N3 tunnel information.

Step 601h: The target UPF 1 sends an N4 session update response message c8 to the SMF.

Correspondingly, the SMF receives the N4 session update response message c8.

Step 601i: The SMF sends a session management context update response message c9 to the AMF.

Correspondingly, the AMF receives the session management context update response message c9 from the SMF. The session management context update response message c9 may indicate that updating of the context of the PDU session of the UE 1 is completed.

According to step 601a to step 601i, the target base station 1 obtains the N3 tunnel information of the target UPF 1, and the target UPF 1 also obtains the N3 tunnel information of the target base station 1. Therefore, establishment of the N3 tunnel between the target base station 1 and the target UPF 1 is completed. In this way, after receiving data from the UE 1, the target base station 1 may send the data to the target UPF 1. After receiving the data that is of the PDU session and that needs to be sent to the UE 1, the target UPF 1 may also send the data to the target base station 1, so that the target base station 1 forwards the data to the UE 1.

It should be noted that in this embodiment of this application, in addition to the example of the procedure in which the SMF triggers context configuration of the PDU session of the UE 1 shown in the pre-switching procedures shown in FIG. 5A to FIG. 5C and FIG. 7A to FIG. 7C, there may be another procedure for configuring the context of the PDU session of the UE 1. This is not limited in this embodiment of this application.

Based on the foregoing content, FIG. 8A to FIG. 8C are an example of a schematic flowchart of still another possible satellite switching method. In FIG. 8A to FIG. 8C, an example in which a first communication apparatus is a source base station 1 and a second communication apparatus is a target base station is used for description. As shown in FIG. 8A to FIG. 8C, the method includes the following steps.

Step 701: The source base station 1 estimates that a UE 1 is switched from the source base station 1 to the target base station 1 at a future moment.

For related content of step 701, refer to related content of step 401 in FIG. 4a. Details are not described again.

Step 702: The source base station 1 sends a pre-switching request message d1 to a source UPF 1.

Correspondingly, the source UPF 1 receives the pre-switching request message d1.

In step 702, the pre-switching request message d1 requests the source UPF 1 to prepare for switching of the UE 1.

Step 703: The target base station 1 sends a pre-switching response message d2 to the source base station 1.

Correspondingly, the source base station 1 receives the pre-switching response message d2.

The pre-switching response message d2 may include a UPF container. The UPF container is to be sent by the source UPF 1 to a target UPF 1. Information in the UPF container may be used to establish an N4 session between the target UPF 1 and an SMF, and a network element (for example, the source base station 1 or the target base station 1) in a transfer process transparently transmits the UPF container. The UPF container may include SMF information corresponding to a PDU session of the UE 1, a context of the PDU session of the UE 1, and the like.

Step 704: The source base station 1 sends a pre-switching request message d3 to the target base station 1.

Correspondingly, the target base station 1 receives the pre-switching request message d3.

The pre-switching request message d3 in step 704 may request the target base station 1 to prepare for switching of the UE 1, for example, create a context for switching of the PDU session of the UE 1.

In a possible implementation, the pre-switching request message d3 carries the UPF container returned by the source UPF 1.

In a possible implementation, a first request message sent by the first communication apparatus mentioned in this embodiment of this application may be the pre-switching request message d3, and the pre-switching request message d3 may indicate that the UE 1 is estimated to be switched at a future moment.

In still another possible implementation, the source base station 1 may further send, to the target base station 1, indication information indicating a PDU session that is to be switched at a future moment. For example, the source base station 1 may indicate, by sending a PDU session list to the target base station 1, PDU sessions of the UE 1 that are to be switched in the future.

In a possible implementation, the pre-switching request message d3 may reuse a switching request message in an existing standard. Further, indication information indicating that the UE 1 is estimated to be switched at a future moment may be added to the message.

In still another possible implementation, signaling of the pre-switching request message d3 may be redefined. The pre-switching request message d3 itself has a meaning of indicating that the UE 1 is estimated to be switched at a future moment.

Step 705: The target base station 1 sends a pre-switching request message d4 to the target UPF 1.

Correspondingly, the target UPF 1 receives the pre-switching request message d4.

In a possible implementation, the target base station 1 may select the target UPF 1 deployed on a same satellite as the target base station 1 as a new UPF of the PDU session of the UE 1, and then perform step 705, to send a pre-switching request message d5 to the target UPF 1. The pre-switching request message d4 may carry the UPF container.

In still another possible implementation, the target base station 1 may further create a context for the PDU session of the UE 1, for example, may allocate an AN N3 tunnel for the PDU session of the UE 1. In this way, the pre-switching request message d4 carries AN N3 tunnel information.

Step 706: The target UPF 1 sends a pre-switching response message d5 to the target base station 1.

Correspondingly, the target base station 1 receives the pre-switching response message d5.

In a possible implementation, the target UPF 1 may create a context for the PDU session of the UE 1, for example, may allocate a CN N3 tunnel for the PDU session of the UE 1. If an Nx tunnel needs to be allocated to the PDU session of the UE 1, the target UPF 1 may further allocate the Nx tunnel to the PDU session of the UE 1. In this embodiment of this application, an example in which there is an Nx tunnel for the PDU session of the UE 1 is used for description. When there is no Nx tunnel for the PDU session of the UE 1, each message that includes the Nx tunnel information in this embodiment of this application no longer includes a rule of the Nx tunnel information.

In a possible implementation, the target UPF 1 generates an N4 container based on the UPF container, the N4 container is sent by the target UPF 1 to the SMF, and the N4 container is used to establish an N4 session between the target UPF 1 and the SMF. The N4 container may include a rule of the CN N3 tunnel information and/or the Nx tunnel information.

The pre-switching response message d5 may include the N4 container and the CN N3 tunnel information. The pre-switching response message d5 includes the N4 container, and the N4 container may be transparently transmitted by the target base station 1 and an AMF to the SMF. The CN N3 tunnel information in the pre-switching response message d5 may be obtained by the target base station 1, so that the target base station 1 and the target UPF 1 may communicate based on the N3 tunnel information on the two sides.

Step 707: The target base station 1 sends a pre-switching request message d6 to the AMF.

Correspondingly, the AMF receives the pre-switching request message d6.

The pre-switching request message d6 may indicate that the UE 1 is estimated to be switched at a future moment.

The pre-switching request message d6 may include N2 session management information corresponding to a plurality of PDU sessions of the UE 1. The N2 session management information is sent by the target base station 1 to the SMF. After receiving the N2 session management information, the AMF transparently transmits the N2 session management information to the SMF corresponding to the PDU session. The N2 session management information may include the N4 container from the target UPF 1 and the AN N3 tunnel information from the target base station 1.

When the first communication apparatus is the source base station 1 and the second communication apparatus is the target base station 1, a seventh request message sent by the target base station 1 may be the pre-switching request message d4 in step 705 (in this case, the pre-switching response message d5 in step 706 may also be referred to as a seventh response message). The seventh request message sent by the target base station 1 may also be the pre-switching request message d6 in step 707 (in this case, a pre-switching response message d9 in step 711 may also be referred to as the seventh response message). The seventh request message indicates that the UE 1 is estimated to be switched to a first target access network device at a future moment. Then, the apparatus that receives the seventh request message may prepare for switching of the UE 1 based on the seventh request message.

Step 708: The AMF sends a session management context update request message d7 to the SMF.

Correspondingly, the SMF receives the session management context update request message d7.

The session management context update request message d7 may indicate that the PDU session of the UE 1 is estimated to be switched at a future moment. For example, the session management context update request message d7 may carry indication information indicating that the PDU session of the UE 1 is estimated to be switched at a future moment.

In a possible implementation, the session management context update request message d7 includes the N2 session management information. In this way, the SMF determines, based on the received session management context update request message d7, that updating of the context of the PDU session of the UE 1 is completed, and may return to step 709. In other words, after receiving the session management context update request message in step 708, the SMF may not need to initiate a context creation procedure for the PDU session of the UE 1, and may perform step 709.

Step 709: The SMF sends a session management context update response message d8 to the AMF.

Correspondingly, the AMF receives the session management context update response message d8.

The session management context update response message d8 in step 709 may indicate that a context has been configured for the PDU session of the UE 1 to be switched to the target base station 1.

In a possible implementation, the session management context update response message d8 in step 709 may carry the N4 container. The N4 container is transmitted to the target UPF 1, and the N4 container may include Nx tunnel information of a UPF 2. In this way, after the target UPF 1 receives the Nx tunnel information of the UPF 2 in subsequent step 712, the target UPF 1 may communicate with the UPF 2 based on the Nx tunnel information of the UPF 2. The N4 container may be transparently transmitted by using subsequent step 711 and step 712.

Step 710: The SMF sends an N4 session update request message b8 to the UPF 2.

The step is optional. Correspondingly, the UPF 2 receives the N4 session update request message b8 from the SMF. The N4 session update request message b8 may include Nx tunnel information of the target UPF 1.

Step 711: The AMF sends a pre-switching response message d9 to the target base station 1.

Correspondingly, the target base station 1 receives the pre-switching response message d9. The pre-switching response message d9 indicates that context updating of switching of the UE 1 is completed.

In a possible implementation, in step 711, the AMF may include, in the pre-switching response message d9, the N4 container received in step 709.

Step 712: The target base station 1 sends a pre-switching request message d10 to the target UPF 1.

Correspondingly, the target UPF 1 receives the pre-switching request message d10.

In a possible implementation, in step 712, the target base station 1 may include, in the pre-switching request message d10, the N4 container received in step 711.

Step 713: The target UPF 1 sends a pre-switching response message d11 to the target base station 1.

Correspondingly, the target base station 1 receives the pre-switching response message d11, and the pre-switching response message d11 may indicate that the target UPF 1 receives the N4 container.

In still another possible implementation, after step 708, the SMF may directly send the Nx tunnel information of the UPF 2 to the target UPF 1. In this way, the session management context update response message d8 in step 709 may not carry the N4 container. Correspondingly, the pre-switching response message d9 in step 711 may no longer carry the N4 container, and step 712 and step 713 may not be performed.

Step 714: The target base station 1 sends a pre-switching response message d12 to the source base station 1.

Correspondingly, the source base station 1 receives the pre-switching response message d12.

The pre-switching response message d12 in step 714 may further include a transparent transmission container sent to the UE 1, and the transparent transmission container includes an RRC reconfiguration message. The pre-switching response message d12 may further indicate that preparations have been made for switching of the UE 1 or switching of the PDU session of the UE 1. Alternatively, the pre-switching response message d12 may indicate that pre-switching of the UE 1 is completed.

In this embodiment of this application, after a pre-switching procedure, a switching procedure may be further performed. The switching procedure after the pre-switching procedure shown in FIG. 8A to FIG. 8C may be the switching procedures shown in FIG. 5A to FIG. 5C and FIG. 7A to FIG. 7C.

In still another possible implementation, in the solution shown in FIG. 8A to FIG. 8C, in the pre-switching procedure, the source base station may obtain, by using step 714, the transparent transmission container sent by the target base station 1 to the UE 1. Therefore, when determining that the UE 1 needs to be switched to the target base station 1, the source base station may not perform step 507 and step 508, but may directly perform step 509. Other content is similar to related content in FIG. 5A to FIG. 5C and FIG. 7A to FIG. 7C, and details are not described again.

Based on the solution shown in FIG. 8A to FIG. 8C, FIG. 9A to FIG. 9C are an example of a schematic flowchart of still another possible satellite switching method. A pre-switching procedure in FIG. 9A to FIG. 9C is different from the pre-switching procedures in FIG. 5A to FIG. 5C, FIG. 6A to FIG. 6C, FIG. 7A to FIG. 7C, and FIG. 8A to FIG. 8C. For the switching procedure in FIG. 9A to FIG. 9C, refer to the content in FIG. 5A to FIG. 5C, FIG. 6A to FIG. 6C, FIG. 7A to FIG. 7C, or FIG. 8A to FIG. 8C. Details are not described again.

As shown in FIG. 9A to FIG. 9C, the method includes the following steps.

Step 801: A source base station 1 estimates that a UE 1 is switched from the source base station 1 to a target base station 1 at a future moment.

For related content of step 801, refer to related content of step 401 in FIG. 4a. Details are not described again.

Step 802: The source base station 1 sends a pre-switching request message e1 to the target base station 1.

Correspondingly, the target base station 1 receives the pre-switching request message e1.

The pre-switching request message e1 may indicate that the UE 1 is estimated to be switched at a future moment. The pre-switching request message e1 may request the target base station 1 to prepare for switching of the UE 1, for example, create a context for PDU session switching of the UE 1.

Compared with the method in FIG. 8A to FIG. 8C, the pre-switching request message e1 in FIG. 9A to FIG. 9C may no longer carry a UPF container. For other content of the pre-switching request message e1, refer to related descriptions of the pre-switching request message d3 in step 704. Details are not described again.

Step 803: The target base station 1 sends a pre-switching request message e2 to an AMF.

Correspondingly, the AMF receives the pre-switching request message e2.

The pre-switching request message e2 may indicate that the UE 1 is estimated to be switched at a future moment.

The pre-switching request message e2 may include AN N3 tunnel information created by the target base station 1 for the PDU session of the UE 1.

In a possible implementation, the pre-switching request message e2 may include N2 session management information of one or more PDU sessions of the UE 1, the N2 session management information may be transparently transmitted by an AMF to an SMF, and the N2 session management information may include AN N3 tunnel information created by the target base station 1 for the PDU session of the UE 1.

When a first communication apparatus is the source base station 1 and a second communication apparatus is the target base station 1, a seventh request message sent by the target base station 1 may be the pre-switching request message e2 (in this case, a pre-switching response message e7 in step 809 may also be referred to as a seventh response message). The seventh request message indicates that the UE 1 is estimated to be switched to a first target access network device at a future moment. Then, the apparatus that receives the seventh request message may prepare for switching of the UE 1 based on the seventh request message.

Step 804: The AMF sends a session management context update request message e3 to the SMF.

Correspondingly, the SMF receives the session management context update request message e3.

The session management context update request message e3 may indicate that the PDU session of the UE 1 is estimated to be switched at a future moment. For example, the session management context update request message e3 may carry indication information indicating that the PDU session of the UE 1 is estimated to be switched at a future moment.

In a possible implementation, the session management context update request message e3 includes N3 tunnel information created by the target base station 1 for the PDU session of the UE 1. For example, the session management context update request message e3 includes the N2 session management information in the pre-switching request message e2, and the N2 session management information may include the AN N3 tunnel information. The session management context update request message e3 may be a possible example of the eighth request message mentioned in embodiments of this application.

Step 805: The SMF sends an N4 session establishment request message e4 to a target UPF 1.

Correspondingly, the target UPF 1 receives the N4 session establishment request message e4. The N4 session establishment request message e4 may carry a rule including the AN N3 tunnel information.

By using step 805, the target UPF 1 obtains the rule including the AN N3 tunnel information, and then may send, to the target base station 1, data of a session that is of a PDU and that is received from a UE 2, so that the target base station 1 sends the data to the UE 1.

In still another possible implementation, when the SMF allocates a CN N3 tunnel to the target UPF 1, the N4 session establishment request message e4 may further include a rule of CN N3 tunnel information.

In still another possible implementation, when the SMF allocates Nx tunnel information to the target UPF 1, the N4 session establishment request message e4 may further include a rule of Nx tunnel information.

Step 806: The target UPF 1 sends an N4 session establishment response message e5 to the SMF.

Correspondingly, the SMF receives the N4 session establishment response message e5.

In a possible implementation, when the SMF does not allocate the CN N3 tunnel information to the target UPF 1, and the target UPF 1 allocates the CN N3 tunnel information to the target UPF 1, the N4 session establishment response message e5 may carry the CN N3 tunnel information.

In still another possible implementation, when the SMF does not allocate the Nx tunnel information to the target UPF 1 and there is the Nx tunnel information for the PDU session of the UE 1, the target UPF 1 allocates the Nx tunnel information to the target UPF 1, and the N4 session establishment response message e5 may carry the Nx tunnel information.

Step 807: The SMF sends a session management context update response message e6 to the AMF.

Correspondingly, the AMF receives the session management context update response message e6.

The session management context update response message e6 may indicate that preparations have been made for switching the PDU session of the UE 1 to the target base station 1, that is, a user plane connection has been created for the PDU session of the UE 1.

In a possible implementation, the session management context update response message e6 may carry CN N3 tunnel information that is created by the target UPF 1 side for the PDU session of the UE 1. For example, the session management context update response message e6 may carry N2 session management information, the N2 session management information may include the CN N3 tunnel information, and the N2 session management information may be transparently transmitted by the AMF to the target base station 1. In this way, the target base station 1 obtains the CN N3 tunnel information. The session management context update response message e6 may be a possible example of the eighth response message mentioned in embodiments of this application.

Step 808: The SMF sends an N4 session update request message b8 to a UPF 2.

This step is optional. Correspondingly, the UPF 2 receives the N4 session update request message b8 from the SMF. The N4 session update request message b8 may include the Nx tunnel information of the target UPF 1.

Step 809: The AMF sends a pre-switching response message e7 to the target base station 1.

Correspondingly, the target base station 1 receives the pre-switching response message e7. The pre-switching response message e7 may indicate that preparations have been made for switching the PDU session of the UE 1 to the target base station 1, that is, a user plane connection has been created for the PDU session of the UE 1.

In a possible implementation, the pre-switching response message e7 may carry the CN N3 tunnel information that is established by the target UPF 1 side for the PDU session of the UE 1. In this way, the target base station 1 may communicate with the target UPF 1 based on the obtained CN N3 tunnel information. The pre-switching response message e7 may be a possible example of the seventh response message mentioned in embodiments of this application.

Step 810: The target base station 1 sends a pre-switching response message e8 to the source base station 1.

Correspondingly, the source base station 1 receives the pre-switching response message e8.

The pre-switching response message e8 in step 810 may further include a transparent transmission container sent to the UE 1, and the transparent transmission container includes an RRC reconfiguration message. The pre-switching response message e8 may further indicate that pre-switching of the UE 1 has been completed, that is, a user plane connection has been established for the PDU session of the UE 1. The pre-switching response message e8 may be a possible example of the first response message mentioned in embodiments of this application.

In embodiments of this application, that a network element (for example, a network element A) obtains information from another network element (for example, a network element B) may mean that the network element A directly receives the information from the network element B, or may mean that the network element A receives the information from the network element B via another network element (for example, a network element C). When the network element A receives the information from the network element B via the network element C, the network element C may transparently transmit the information, or may process the information, for example, include the information in different messages for transmission, or screen the information, and send only information obtained through screening to the network element A. Similarly, in various embodiments of this application, that the network element A sends information to the network element B may mean that the network element A directly sends the information to the network element B, or may mean that the network element A sends the information to the network element B via another network element (for example, the network element C).

The terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may singular or plural.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

It should be noted that, in embodiments of this application, to distinguish messages more clearly, sequence numbers are added to some messages for distinguishing, for example, the session management context update request message b0 and the session management context update response message b1. These sequence numbers are merely used to distinguish the messages, and do not have a limitation meaning.

It should be noted that, names of the foregoing messages are merely examples. With evolution of communication technologies, the name of any foregoing message may change. However, regardless of how the names of the messages change, provided that meanings of the messages are the same as those of the messages in this application, the messages fall within the protection scope of this application.

The foregoing mainly describes the solutions provided in this application from a perspective of interaction between the network elements. It may be understood that, to implement the foregoing functions, each network element includes a corresponding hardware structure and/or software module for executing each function. A person of ordinary skill in the art should easily be aware that, in combination with the examples described in embodiments disclosed in this specification, units and algorithm steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that such implementation goes beyond the scope of the present invention.

According to the foregoing method, FIG. 10 is a schematic diagram of a structure of a communication apparatus according to an embodiment of this application. As shown in FIG. 10, the communication apparatus may be a first communication apparatus or a second communication apparatus (the second communication apparatus may be an SMF, a target base station 1, or the like), or may be a chip or a circuit, for example, a chip or a circuit that may be disposed in the first communication apparatus, or a chip or a circuit that may be disposed in the second communication apparatus.

The communication apparatus 1801 includes a processor 1802 and a transceiver 1803.

Further, the communication apparatus 1801 may include a memory 1804. In the figure, the memory 1804 is a dashed line, which further indicates that the memory is optional.

Further, the communication apparatus 1801 may further include a bus system. The processor 1802, the memory 1804, and the transceiver 1803 may be connected through the bus system.

It should be understood that, the processor 1802 may be a chip. For example, the processor 1802 may be a field programmable gate array (field programmable gate array, FPGA), an application-specific integrated chip (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing methods may be implemented by a hardware integrated logic circuit or instructions in a form of software in the processor 1802. The steps of the methods disclosed with reference to embodiments of this application may be directly implemented by a hardware processor, or may be implemented by using a combination of hardware in a processor 1802 and a software module. The software module may be located in a mature storage medium in the art, for example, a random access memory, a flash memory, a read-only memory, a programmable read-only memory, an electrically erasable programmable memory, or a register. The storage medium is located in the memory 1804. The processor 1802 reads information in the memory 1804, and completes the steps of the foregoing method in combination with hardware of the processor 1802.

It should be noted that the processor 1802 in this embodiment of this application may be an integrated circuit chip and has a signal processing capability. In an implementation process, the steps in the foregoing method embodiments may be completed by an integrated logic circuit in a form of hardware or instructions in a form of software in the processor. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory 1804 in embodiments of this application may be a volatile memory or a nonvolatile memory, or may include a volatile memory and a nonvolatile memory. For related descriptions of the memory in embodiments of this application, refer to the foregoing content. Details are not described herein again.

When the communication apparatus 1801 is the foregoing first communication apparatus, the processor 1802 is configured to: estimate, by using the transceiver 1803, that a first terminal device is switched from a source access network device to a first target access network device at a future moment, and send a first request message. The first request message indicates that a protocol data unit PDU session of the first terminal device is estimated to be switched at a future moment, or the first request message indicates that the first terminal device is estimated to be switched at a future moment. The source user plane function network element and the source access network device that provide services for the PDU session before switching are deployed on a first satellite.

When the communication apparatus 1801 is the second communication apparatus, for example, an SMF, the transceiver 1803 is configured to receive the first request message by using the transceiver 1803. The first request message indicates that the protocol data unit PDU session of the first terminal device is estimated to be switched at a future moment. A fifth request message is sent. The fifth request message is used to request to establish a context of a PDU session in a first target user plane function network element. The source user plane function network element and the source access network device that provide services for the PDU session before switching are deployed on the first satellite. The first target user plane function network element is a user plane function network element that is selected by a session management function network element to provide a service for the PDU session after switching, and the first target user plane function network element and the first target access network device that provide services for the PDU session after switching are deployed on a second satellite.

When the communication apparatus 1801 is the second communication apparatus, for example, the target base station 1, the transceiver 1803 is configured to: receive the first request message, and send a seventh request message by using the transceiver 1803. The first request message indicates that the first terminal device is estimated to be switched at a future moment. The source user plane function network element and the source access network device that provide services for the unswitched protocol data unit PDU session are deployed on the first satellite. The seventh request message indicates that a PDU session of the first terminal device is estimated to be switched to the first target access network device at a future moment, and the seventh request message includes a context of the first terminal device corresponding to the first target access network device.

For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing method, FIG. 11 is a schematic diagram of a structure of a communication apparatus according to an embodiment of this application. As shown in FIG. 11, the communication apparatus 1901 may include a communication interface 1903 and a processor 1902. Further, the communication apparatus 1901 may include a memory 1904. In the figure, the memory 1904 is a dashed line, which further indicates that the memory is optional. The communication interface 1903 is configured to input and/or output information. The processor 1902 is configured to execute a computer program or instructions, so that the communication apparatus 1901 implements the method on the first communication apparatus side in any one of the related solutions in FIG. 4a, FIG. 5A to FIG. 5C, FIG. 6A to FIG. 6C, FIG. 7A to FIG. 7C, FIG. 8A to FIG. 8C, or FIG. 9A to FIG. 9C, or the communication apparatus 1901 implements the method on the second communication apparatus side in any one of the related solutions in FIG. 4a, FIG. 5A to FIG. 5C, FIG. 6A to FIG. 6C, FIG. 7A to FIG. 7C, FIG. 8A to FIG. 8C, or FIG. 9A to FIG. 9C. In this embodiment of this application, the communication interface 1903 may implement the solution implemented by the transceiver 1803 in FIG. 10, the processor 1902 may implement the solution implemented by the processor 1802 in FIG. 10, and the memory 1904 may implement the solution implemented by the memory 1804 in FIG. 10. Details are not described herein again.

Based on the foregoing embodiments and a same concept, FIG. 12 is a schematic diagram of a communication apparatus according to an embodiment of this application. As shown in FIG. 12, the communication apparatus 2001 may be a first communication apparatus or a second communication apparatus, or may be a chip or a circuit, for example, a chip or a circuit that may be disposed in the first communication apparatus or the second communication apparatus.

The communication apparatus 2001 includes a processing unit 2002 and a communication unit 2003. Further, the communication apparatus 2001 may include a storage unit 2004, or may not include a storage unit 2004. The storage unit 2004 in the figure is a dashed line, which further indicates that the memory is optional.

The communication unit 2003 is configured to input and/or output information. The processing unit 2002 is configured to execute a computer program or instructions, so that the communication apparatus 2001 implements the method on the first communication apparatus side in any one of the related solutions in FIG. 4a, FIG. 5A to FIG. 5C, FIG. 6A to FIG. 6C, FIG. 7A to FIG. 7C, FIG. 8A to FIG. 8C, or FIG. 9A to FIG. 9C, or the communication apparatus 2001 implements the method on the second communication apparatus side in any one of the related solutions in FIG. 4a, FIG. 5A to FIG. 5C, FIG. 6A to FIG. 6C, FIG. 7A to FIG. 7C, FIG. 8A to FIG. 8C, or FIG. 9A to FIG. 9C. In this embodiment of this application, the communication unit 2003 may implement the solution implemented by the transceiver 1803 in FIG. 10, the processing unit 2002 may implement the solution implemented by the processor 1802 in FIG. 10, and the storage unit 2004 may implement the solution implemented by the memory 1804 in FIG. 10. Details are not described herein again.

According to the method provided in embodiments of this application, this application further provides a computer program product. The computer program product includes computer program code or instructions, and when the computer program code or the instructions are run on a computer, the computer is enabled to perform the method in any one of the embodiments shown in FIG. 4a, FIG. 5A to FIG. 5C, FIG. 6A to FIG. 6C, FIG. 7A to FIG. 7C, FIG. 8A to FIG. 8C, or FIG. 9A to FIG. 9C.

According to the method provided in embodiments of this application, this application further provides a computer-readable storage medium. The computer-readable storage medium stores program code, and when the program code is run on a computer, the computer is enabled to perform the method in any one of the embodiments shown in FIG. 4a, FIG. 5A to FIG. 5C, FIG. 6A to FIG. 6C, FIG. 7A to FIG. 7C, FIG. 8A to FIG. 8C, or FIG. 9A to FIG. 9C.

According to the method provided in embodiments of this application, this application further provides a chip system. The chip system may include a processor. The processor is coupled to a memory, and may be configured to perform the method in any one of the embodiments shown in FIG. 4a, FIG. 5A to FIG. 5C, FIG. 6A to FIG. 6C, FIG. 7A to FIG. 7C, FIG. 8A to FIG. 8C, or FIG. 9A to FIG. 9C. Optionally, the chip system further includes the memory. The memory is configured to store a computer program (which may also be referred to as code or instructions). The processor is configured to invoke the computer program from the memory and run the computer program, so that the device in which the chip system is installed performs the method in any one of the embodiments shown in FIG. 4a, FIG. 5A to FIG. 5C, FIG. 6A to FIG. 6C, FIG. 7A to FIG. 7C, FIG. 8A to FIG. 8C, or FIG. 9A to FIG. 9C.

According to the method provided in embodiments of this application, this application further provides a system, including the foregoing one or more first communication apparatuses and one or more second communication apparatuses.

All or some of the foregoing embodiments may be implemented by software, hardware, firmware, or any combination thereof. When the software is used to implement embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes copyright-protected content. The copyright owner reserves the copyright except copies are made for the patent documents or the recorded content of the patent documents in the Patent Office.

The second communication apparatus and the first communication apparatus in the foregoing apparatus embodiments correspond to the second communication apparatus and the first communication apparatus in the method embodiments, and a corresponding module or unit performs a corresponding step. For example, a communication unit (a transceiver) performs a receiving or sending step in the method embodiments, and a processing unit (a processor) may perform another step other than sending or receiving. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, a computing device and an application that runs on a computing device may be both components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the internet interacting with another system by using a signal).

A person of ordinary skill in the art may be aware that, in combination with illustrative logical blocks (illustrative logical blocks) described in embodiments disclosed in this specification and steps (steps), this application may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. When functions are implemented in the form of a software function unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite switching method, wherein the method comprises:
estimating, by a first communication apparatus, that a first terminal device is switched from a source access network device to a first target access network device at a future moment; and
sending, by the first communication apparatus, a first request message, wherein the first request message indicates that a protocol data unit PDU session of the first terminal device is estimated to be switched at a future moment, or the first request message indicates that the first terminal device is estimated to be switched at a future moment, and a source user plane function network element that provides a service for the PDU session before switching and the source access network device are deployed on a first satellite.

2. The method according to claim 1, wherein the estimating, by a first communication apparatus, that a first terminal device is switched from a source access network device to a first target access network device at a future moment comprises:
estimating, by the first communication apparatus based on location information of the first terminal device and a moving track of the first satellite, that the first terminal device is switched from the source access network device to the first target access network device at a future moment.

3. The method according to claim 1, wherein the estimating, by a first communication apparatus, that a first terminal device is switched from a source access network device to a first target access network device at a future moment comprises:
receiving, by the first communication apparatus, a second request message, wherein the second request message indicates that the first terminal device is estimated to be switched from the source access network device to the first target access network device at a future moment; and
estimating, by the first communication apparatus based on the second request message, that the first terminal device is switched from the source access network device to the first target access network device at a future moment.

4. The method according to any one of claims 1 to 3, wherein the first request message comprises at least one of information about the first target access network device, information about a first target user plane function network element, or information about a second satellite; and
the first target access network device and the first target user plane function network element are deployed on the second satellite.

5. The method according to any one of claims 1 to 4, wherein after the sending, by the first communication apparatus, a first request message, the method further comprises:
determining, by the first communication apparatus, that the first terminal device is switched to the first target access network device; and
sending, by the first communication apparatus, a third request message, wherein the third request message indicates that the PDU session has been switched.

6. The method according to claim 5, wherein the determining, by the first communication apparatus, that the first terminal device is switched to the first target access network device comprises:
receiving, by the first communication apparatus, a first path switching request message from the first target access network device, wherein the first path switching request message indicates that the PDU session has been switched; and
determining, by the first communication apparatus based on the first path switching request message, that the first terminal device is switched to the first target access network device and the PDU session has been switched.

7. The method according to any one of claims 1 to 4, wherein after the sending, by the first communication apparatus, a first request message, the method further comprises:
determining, by the first communication apparatus, that the first terminal device is switched to a second target access network device, wherein the second target access network device is different from the first target access network device; and
sending, by the first communication apparatus, a fourth request message, wherein the fourth request message indicates that the PDU session is to be switched.

8. The method according to any one of claims 1 to 7, wherein the sending, by the first communication apparatus, a first request message comprises:
sending, by the first communication apparatus, the first request message to a session management function network element; or
sending, by the first communication apparatus, the first request message to the first target access network device or an access and mobility management network element.

9. A satellite switching method, wherein the method comprises:
receiving, by a session management function network element, a first request message, wherein the first request message indicates that a protocol data unit PDU session of a first terminal device is estimated to be switched at a future moment, and a source user plane function network element and a source access network device that provide services for the PDU session before switching are deployed on a first satellite; and
sending, by the session management function network element, a fifth request message, wherein the fifth request message requests to configure context of the PDU session in a first target user plane function network element, wherein
the first target user plane function network element is an estimated user plane function network element that provides a service for the PDU session after switching, a first target access network device is an estimated access network device that provides a service for the PDU session after switching, and the first target user plane function network element and the first target access network device are deployed on a second satellite.

10. The method according to claim 9, wherein the first request message comprises at least one of information about the first target access network device, information about the first target user plane function network element, or information about the second satellite.

11. The method according to claim 9 or 10, wherein after the sending, by the session management function network element, a fifth request message, the method further comprises:
receiving, by the session management function network element, a fifth response message, wherein the fifth response message indicates that the first target user plane function network element has configured the context of the PDU session.

12. The method according to claim 11, wherein after the receiving, by the session management function network element, a fifth response message, the method further comprises:
receiving, by the session management function network element, a third request message, wherein the third request message is used to request updating of the context of the PDU session; and
when the third request message indicates that the PDU session has been switched, returning, by the session management function network element, a third response message based on indication information indicating that the PDU session has been switched, wherein the third response message indicates that the updating of the context of the PDU session is completed.

13. The method according to claim 12, wherein after the receiving, by the session management function network element, a third request message, the method further comprises:
when the third request message indicates that the PDU session is to be switched, returning, by the session management function network element, the third response message based on the fifth response message, wherein the third response message indicates that the updating of the context of the PDU session is completed.

14. The method according to any one of claims 11 to 13, wherein after the receiving, by the session management function network element, a fifth response message, the method further comprises:
receiving, by the session management function network element, a fourth request message, wherein the fourth request message is used to request updating of the context information of the PDU session; and when the fourth request message indicates that the PDU session is to be switched:
sending, by the session management function network element, a sixth request message when determining that the PDU session is to be switched to a second target user plane function network element, wherein the sixth request message requests to configure the context of the PDU session in the second target user plane function network element.

15. A satellite switching method, wherein the method comprises:
receiving, by a first target access network device, a first request message, wherein the first request message indicates that a first terminal device is estimated to be switched at a future moment, and a source user plane function network element and a source access network device that provide services for a protocol data unit PDU session of the first terminal device before switching are deployed on a first satellite; and
sending, by the first target access network device, a seventh request message, wherein the seventh request message comprises information about a tunnel configured by the first target access network device for the PDU session, and the seventh request message indicates that the first terminal device is estimated to be switched at a future moment.

16. The method according to claim 15, wherein after the sending, by the first target access network device, a seventh request message, the method further comprises:
sending, by the first target access network device, a first response message to the source access network device, wherein the first response message indicates that the first terminal device completes pre-switching, wherein
the first response message further comprises radio access control RRC configuration information required by the first terminal device for accessing the first target access network device.

17. The method according to claim 15 or 16, wherein after the sending, by the first target access network device, a seventh request message, the method further comprises:
receiving, by the first target access network device from the first terminal device, a message indicating that radio access control RRC reconfiguration is completed; and
sending, by the first target access network device, a first path switching request message, wherein the first path switching request message indicates that the PDU session of the first terminal device has been switched.

18. A communication apparatus, comprising a communication interface and a processor, wherein
the communication interface is configured to input and/or output signaling or data; and
the processor is configured to execute a computer-executable program, to enable the method according to any one of claims 1 to 17 to be performed through the communication interface.

19. A communication apparatus, comprising a processor and a memory, wherein
the memory is configured to store a computer program or instructions; and
the processor is configured to execute the computer program or the instructions in the memory, to enable the method according to any one of claims 1 to 17 to be performed.

20. A communication apparatus, comprising a processing module and a communication module, wherein the processing module is configured to perform the method according to any one of claims 1 to 17 by using the communication module.

21. A chip system, comprising a processor, wherein the processor is coupled to a memory, and is configured to execute a computer program or instructions stored in the memory, to enable the method according to any one of claims 1 to 17 to be performed.

22. A computer-readable storage medium, wherein the computer-readable storage medium stores a computer-executable instruction, and when the computer-executable instruction is invoked and executed by a computer, the method according to any one of claims 1 to 17 is performed.
